# EUROPEAN PATENT SPECIFICATION

(11) **EP 3 692 685 B1**
(45) Date of publication and mention of the grant of the patent: **19.04.2023**
(21) Application number: 17797724.6
(22) Date of filing: 06.10.2017
(51) Int. Cl.: H04L 61/2521, H04L 41/0663, H04L 41/0806, H04L 41/342, H04L 41/40, H04L 41/0813

(54) **REMOTELY CONTROLLING NETWORK SLICES IN A NETWORK**
FERNSTEUERUNG VON NETZWERKSLICES IN EINEM NETZWERK
COMMANDE À DISTANCE DE TRANCHES DE RÉSEAU DANS UN RÉSEAU

(43) Date of publication of application: 12.08.2020
(73) Proprietor: Telefonaktiebolaget LM Ericsson (publ), 164 83 Stockholm (SE)
(72) Inventor: RANJBAR, Alireza, 02200 Espoo (FI); BEIJAR, Nicklas, 02400 Kirkkonummi (FI)
(74) Representative: Ericsson
(86) International application number: PCT/IB2017/056201
(87) International publication number: WO 2019/069120

(56) References cited:
- US-A1- 2017 026 283
- MARC KOERNER ET AL: "Multiple service load-balancing with OpenFlow", HIGH PERFORMANCE SWITCHING AND ROUTING (HPSR), 2012 IEEE 13TH INTERNATIONAL CONFERENCE ON, IEEE, 24 June 2012 (2012-06-24), pages 210-214, XP032217657, DOI: 10.1109/HPSR.2012.6260852 ISBN: 978-1-4577-0831-2
- AHMED MOHAMED FEKIH ET AL: "A Software-Defined Scalable and Autonomous Architecture for Multi-tenancy", 2014 IEEE INTERNATIONAL CONFERENCE ON CLOUD ENGINEERING, IEEE, 11 March 2014 (2014-03-11), pages 568-573, XP032647658, DOI: 10.1109/IC2E.2014.46 [retrieved on 2014-09-18]
- ROB SHERWOOD ET AL: "FlowVisor: A Network Virtualization Layer", INTERNET CITATION, 14 October 2009 (2009-10-14), pages 1-15, XP002639208, Retrieved from the Internet: URL:http://www.openflow.org/downloads/tech nicalreports/openflow-tr-2009-1-flowvisor. pdf> [retrieved on 2011-05-27]

## Description

### TECHNICAL FIELD

Embodiments described herein relate to the field of controlling network slices; and more specifically, to managing transmissions between hypervisors and network switches, which comprise network slices, through the use of a management server.

### BACKGROUND

The next generation of mobile networks (e.g., 5^{th} generation or 5G mobile networks) will enable the deployment of end-to-end network slices that may span across different operator networks. A network slice is an isolated segment of a set of operator networks that appears to a network device of a user as a single and complete mobile network. Thus, a network slice contains both a user plane and a control plane for a mobile network. Network slices can be controlled by operators as well as third parties (hereinafter "slice operators"). Software-Defined Networks (SDNs) will play a critical role in the deployment of network slices as SDNs enable slice operators to control and manage the network slices in a scalable manner.

In one example SDN architecture, a set of SDN controllers may be used to handle a network slice that is comprised of resources from a set of SDN switches. In this SDN architecture, to connect SDN switches to the SDN controllers, each SDN switch is configured with a list of internet protocol (IP) addresses of the SDN controllers that control the network slice. Therefore, all IP addresses for all SDN controllers should be predefined in the SDN switches. Based on the predefined IP addresses, the SDN switches make a connection (e.g., a Transmission Control Protocol (TCP) and additionally Transport Layer Security (TLS) connection) to all SDN controllers. If one SDN controller fails, another SDN controller takes over and manages the SDN switches. According to the OpenFlow specification, a SDN switch cannot itself decide which SDN controller will process requests, but instead tries to maintain a connection to each predefined SDN controller. Moreover, the SDN switches usually transmit requests for obtaining route information (e.g., packet-in messages in OpenFlow) to all SDN controllers that have equal and master roles. In addition to potentially being an inefficient transmission of requests, any changes to the predefined IP addresses of SDN controllers requires reconfiguration of all affected SDN switches.

Additionally, as described above, slice operators may manage their dedicated network slice with their own SDN controllers. However, this control by slice operators requires isolating network slices from each other and limiting their scope within the operator networks such that each slice operator can control their own network slice without the possibility of interfering with other network slices. To do so, some solutions, employ a hypervisor to translate control messages between SDN controllers and SDN switches of operator networks. However, this approach by itself is not scalable for large networks and it may even lead to severe security issues (particularly for network slices with higher security requirements) as each hypervisor must be manually setup and configured for each network slice.

Non-patent literature "MARC KOERNER ET AL: "Multiple service load-balancing with OpenFlow", IEEE 13TH INTERNATIONAL CONFERENCE ON HIGH PERFORMANCE SWITCHING AND ROUTING (HPSR), 24 June 2012" discloses a short overview about the OpenFlow technology and the main building blocks for the implementation of a new load balancing concept, the architecture of the proposed load balancing concept and the implementation details of a prototype.

US 2017/026283 A1 discloses adding "multi-tenant awareness" to a set of one or more packet processing devices in a Software Defined Network (SDN) having a controller. For each of one or more tenants, information in a table associates network protocol address attributes with an Internet Protocol (IP) address unique to the tenant. The table is associated with a multiple layer translation layer being managed by the SDN controller. As a data packet traverses the translation layer, network protocol address attributes are translated according to values in the table to enable logical routing of the packet (to a given PPD. This translation occurs dynamically (or "on-the-fly") as packets are "on route" to their destination. By implementing a multi-layer network address translation (NAT), one layer may be used to translate network protocol address source attributes, while a second layer may be used to translate network protocol address destination attributes.

Non-patent literature "AHMED MOHAMED FEKIH ET AL: "A Software-Defined Scalable and Autonomous Architecture for Multi-tenancy", 2014 IEEE INTERNATIONAL CONFERENCE ON CLOUD ENGINEERING, 11 March 2014" discloses Open virtual Network Management and Security (Open vNMS) for supporting transparent multi-tenancy. Basing on elastic L2 isolation using SDN components' flexibility, an autonomic architecture to provide self-control, self-management and self-adaptive capabilities for the network is disclosed.

Non-patent literature "ROB SHERWOOD ET AL: "FlowVisor: A Network Virtualization Layer", 14 October 2009, pages 1-15" discloses an approach to switch virtualization in which the same hardware forwarding plane can be shared among multiple logical networks, each with distinct forwarding logic. Switch-level virtualization is used to build a research platform which allows multiple network experiments to run side-by-side with production traffic while still providing isolation and hardware forwarding speeds. This approach is disclosed as being compatible with commodity switching chipsets and does not require the use of programmable hardware such as FPGAs or network processors.

### SUMMARY

The present invention is defined by the appended independent claims, to which reference should now be made. Specific embodiments are defined in the dependent claims.

As described herein the devices and methods may dynamically manage connections (e.g., control connections) between hypervisors and network switches and without the need to reconfigure the network switches to account for or affect a change in the network system. In particular, by configuring the network switches with a fixed set of outgoing Internet Protocol

(IP) addresses and allowing a management server control which of the fixed outgoing IP addresses is mapped to a hypervisor via a network address translation (NAT) device, each network switch does not need to be reconfigured to account for or affect a change to a policy of a network slice or a topology change in the network system. Since there may be numerous network switches (e.g., hundreds or thousands), the ability to change hypervisors without needing to reconfigure each affected network switch reduces overhead and allows for a more dynamic network system.

### BRIEF DESCRIPTION OF THE DRAWINGS

The systems, devices, structures, methods, and designs may best be understood by referring to the following description and accompanying drawings that are used to illustrate embodiments. In the drawings:
Figure 1 shows a network system according to one embodiment.
Figure 2A shows an example of a set of network slices with non-overlapping network switches according to one embodiment.
Figure 2B shows an example of a set of network slices with overlapping network switches according to one embodiment.
Figure 3 shows a mapping table used by a network address translation (NAT) device according to one embodiment.
Figure 4 shows an example of a translation between a Software Defined Network (SDN) switch and a hypervisor via the NAT device according to one embodiment.
Figure 5 shows a set of outgoing internet protocol (IP) addresses fixed in a SDN switch according to one embodiment.
Figure 6 shows a method for managing transmissions between hypervisors and SDN switches according to one embodiment.
Figure 7 shows an example data exchange between several devices in the network system according to one embodiment.
Figure 8A illustrates connectivity between network devices (NDs) within an exemplary network, as well as three exemplary implementations of the NDs, according to some embodiments.
Figure 8B illustrates an exemplary way to implement a special-purpose network device according to some embodiments.
Figure 8C illustrates various exemplary ways in which virtual network elements (VNEs) may be coupled according to some embodiments.
Figure 8D illustrates a network with a single network element (NE) on each of the NDs, and within this straight forward approach contrasts a traditional distributed approach (commonly used by traditional routers) with a centralized approach for maintaining reachability and forwarding information (also called network control), according to some embodiments.
Figure 8E illustrates the simple case of where each of the NDs implements a single NE, but a centralized control plane has abstracted multiple of the NEs in different NDs into (to represent) a single NE in one of the virtual network(s), according to some embodiments.
Figure 8F illustrates a case where multiple VNEs are implemented on different NDs and are coupled to each other, and where a centralized control plane has abstracted these multiple VNEs such that they appear as a single VNE within one of the virtual networks, according to some embodiments.
Figure 9 illustrates a general-purpose control plane device with centralized control plane (CCP) software 950, according to some embodiments.

### DETAILED DESCRIPTION

The following description describes methods and apparatuses for managing network slices through the use of a management server. In some embodiments, the management server (1) selects and configures a hypervisor or instantiate a new hypervisor in the cloud for a Software Defined Network (SDN) switch and/or (2) modify entries in a network address translation (NAT) device to control communications from the SDN switch to a selected hypervisor. In the following description, numerous specific details such as logic implementations, opcodes, means to specify operands, resource partitioning/sharing/duplication implementations, types and interrelationships of system components, and logic partitioning/integration choices are set forth in order to provide a more thorough understanding of the present systems, devices, structures, methods, and designs. It will be appreciated, however, by one skilled in the art that the embodiments described herein may be practiced without such specific details. In other instances, control structures, gate level circuits and full software instruction sequences have not been shown in detail in order not to obscure the systems, devices, structures, methods, and designs described herein. Those of ordinary skill in the art, with the included descriptions, will be able to implement appropriate functionality without undue experimentation.

References in the specification to "one embodiment," "an embodiment," "an example embodiment," etc., indicate that the embodiment described includes a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

Bracketed text and blocks with dashed borders (e.g., large dashes, small dashes, dot-dash, and dots) may be used herein to illustrate optional operations that add additional features to embodiments. However, such notation should not be taken to mean that these are the only options or optional operations, and/or that blocks with solid borders are not optional in certain embodiments.

In the following description and claims, the terms "coupled" and "connected," along with their derivatives, may be used. It should be understood that these terms are not intended as synonyms for each other. "Coupled" is used to indicate that two or more elements, which may or may not be in direct physical or electrical contact with each other, co-operate or interact with each other. "Connected" is used to indicate the establishment of communication between two or more elements that are coupled with each other.

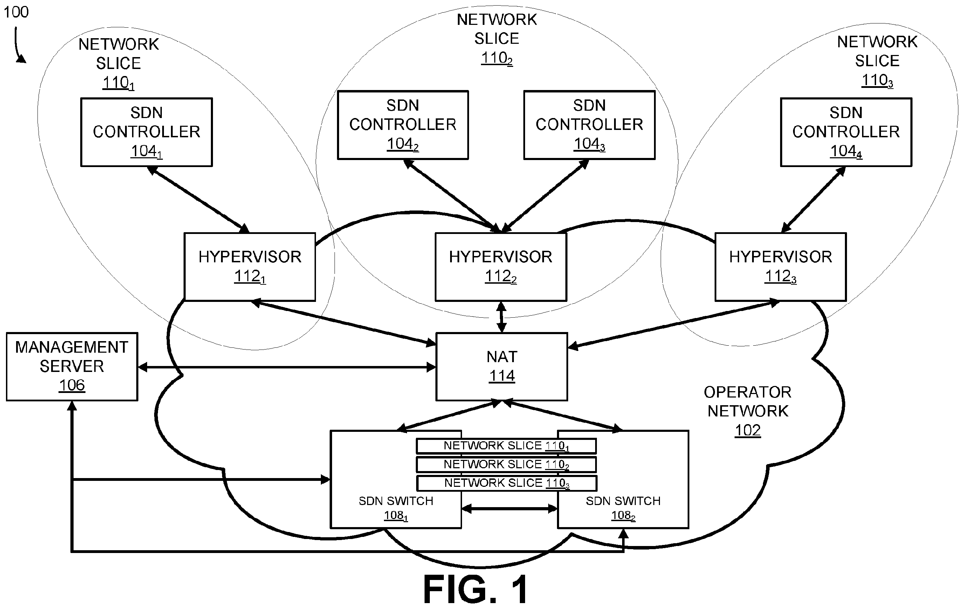

Figure 1 shows a network system 100 according to one embodiment. The network system 100 is composed of an operator network 102, a set of one or more Software Defined Network (SDN) controllers 104, and a management server 106. As shown, in one example embodiment, the operator network 102 includes a set of SDN switches 108, a network address translation (NAT) device 114, and a set of hypervisors 112. The SDN switches 108 are used to compose network slices 110 that are controlled or managed by corresponding SDN controllers 104. In particular, resources of SDN switches 108 are managed by SDN controllers 104 and these managed resources of the SDN switches 108 (e.g., SDN switch 108 ports, switching capacity, packet processing rules, and quality of service specifications) along with corresponding SDN controllers 104 may compose the network slices 110. In this embodiment, each of the hypervisors 112 may conceptually reside on the edge of the operator network 102 to control traffic between the SDN controllers 104 and the SDN switches 108. As will be described herein, the management server 106 provides functionality that dynamically adjusts each configuration of the network slices 110 without reconfiguration of corresponding SDN switches 108. In particular, the management server 106 adjusts which hypervisor 112 is used for managing communications between SDN controllers 104 and SDN switches 108 by adjusting address mappings in the NAT device 114. In this fashion, the management server 106 allows for dynamic adjustment of network slices 110 without the arduous task of adjusting each of the SDN switches 108.

As described above, in one embodiment, the operator network 102 includes a number of SDN switches 108. Although shown with two SDN switches 108₁ and 108₂, in other embodiments the operator network 102 has any number of SDN switches 108 (e.g., hundreds or thousands of SDN switches 108). Each of the SDN switches 108 may be a combination of hardware and software that connects devices together on a computer network by using packet switching to receive, process, and forward data to a destination device. For example, each SDN switch 108 may be a multiport network bridge that uses hardware addresses to process and forward data at the data link layer (layer 2) of the Open Systems Interconnection (OSI) model. In the embodiments described herein, the SDN switches 108 communicate with SDN controllers 104. In this configuration, the SDN controllers 104 and SDN switches 108 operate in an SDN architecture. In an SDN architecture, the data plane (e.g., packet forwarding) is decoupled from the control plane (e.g., configuration of routing tables). Accordingly, in the SDN architecture the data plane is implemented in the SDN switches 108 but the control plane is implemented in software by the SDN controllers 104. For example, the SDN controllers 104 may determine and/or control routing decisions for each of the SDN switches 108. In this example embodiment, the SDN switches 108 and the SDN controllers 104 communicate using control messages passed between the SDN controllers 104 and the SDN switches 108. The control messages and the communications between the SDN controllers 104 and the SDN switches 108 may utilize any protocol, including the OpenFlow protocol, which gives access to the forwarding plane of the SDN switches 108.

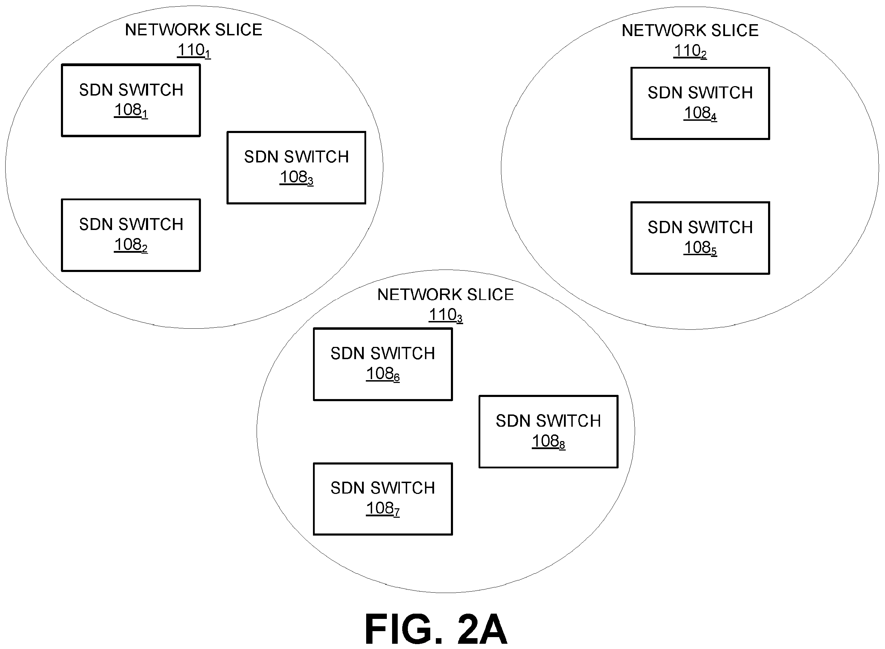

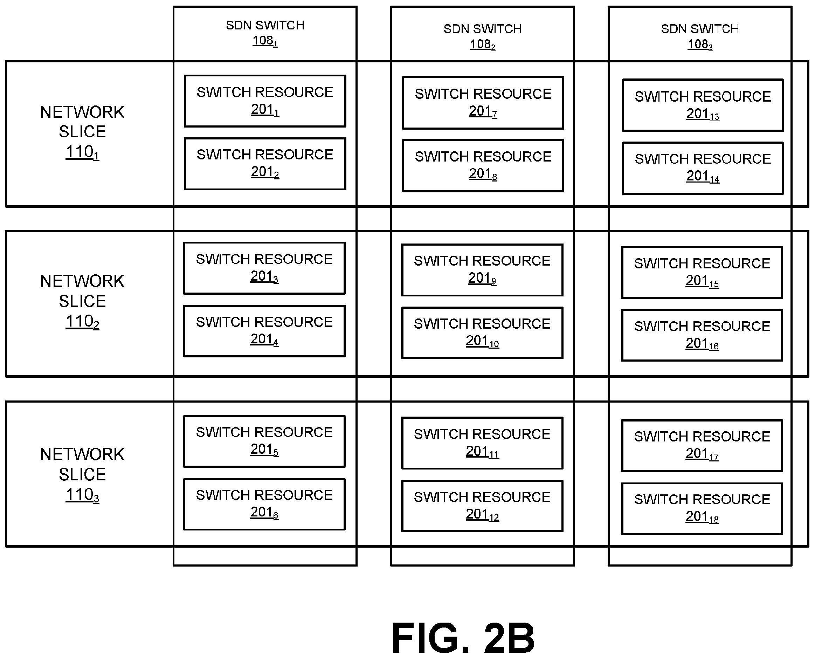

In some embodiments, sets of the SDN switches 108 may be logically grouped together to form network slices 110. For example, as shown in Figure 2A, each of the network slices 110 is composed of sets of SDN switches 108. As shown in this example, the network slice 110₁ is composed of the SDN switches 108₁, 108₂, and 108₃, the network slice 110₂ is composed of the SDN switches 108₄ and 108₅, and the network slice 110₃ is composed of the SDN switches 108₆, 108₇, and 108₈. Although described as the network slices 110 being composed of separate SDN switches 108, in some embodiments the SDN switches 108 overlap between network slices 110. In particular, network slices 110 may utilize separate resources in a SDN switch 108. For example, as shown in Figure 2B, network slice 110₁ is composed of switch resources 201₁ and 201₂ from SDN switch 108₁, switch resources 201₇ and 201₈ from SDN switch 108₂, and switch resources 201₁₃ and 201₁₄ from SDN switch 108₃. Network slice 110₂ is composed of switch resources 201₃ and 201₄ from SDN switch 108₁, switch resources 201₉ and 201₁₀ from SDN switch 108₂, and switch resources 201₁₅ and 201₁₆ from SDN switch 108₃. Network slice 110₃ is composed of switch resources 201₅ and 201₆ from SDN switch 108₁, switch resources 201₁₁ and 201₁₂ from SDN switch 108₂, and switch resources 201₁₇ and 201₁₈ from SDN switch 108₃. Each of the network slices 110 may be viewed as a virtual network within the operator network 102 that appears to a network device (e.g., a phone) of a user as a single and complete mobile network. In some embodiments, each network slice 110 is dedicated to a specified set of devices or a specified type of network traffic. For example, the network slice 110₁ may be dedicated to Internet-of-Things (IoT) devices and/or traffic, the network slice 110₂ may be dedicated to entertainment devices and/or traffic, and the network slice 110₃ may be dedicated to industrial/factory devices and/or traffic. In some embodiments, the set of SDN switches 108 used by each network slice 110 may be overlapping between network slices 110. In these embodiments, the SDN controllers 104 may manage specific resources of each SDN switch 108 and the combined resources managed by a set of SDN controllers 104 associated with a network slice 110 compose the network slice 110. Further, although described as network slices 110 composed of SDN switches 108 from a single operator network 102, in other example embodiments, each of the network slices 110 may extend across multiple operator networks 102.

As noted above, in some embodiments, each network slice 110 may be controlled or managed using a set of SDN controllers 104. For example, the SDN controllers 104 may control routing decisions for corresponding network slices 110. In one embodiment, this management of network slices 110 is performed via communications between the SDN switches 108 that make up network slices 110 and the SDN controllers 104 that manage the network slices 110. For example, the SDN controllers 104 may communicate with the SDN switches 108 using OpenFlow or a similar protocol to control routing decisions of the SDN switches 108. In some embodiments, multiple SDN controllers 104 may be used to manage a single network slice 110. For example, as shown in Figure 1, the SDN controllers 104₂ and 104₃ jointly manage the network slice 110₂ (e.g., management of the network slice 110₁ in a distributed fashion).

As shown in Figure 1, the SDN controllers 104 may reside outside the operator network 102 and communicate with corresponding SDN switches 108 through an associated hypervisor 112 (also known as a virtual machine monitor (VMM)). In one embodiment, the hypervisors 112 are responsible for translation and filtering of messages (e.g. OpenFlow messages) between the SDN controllers 104 and the SDN switches 108. For example, a hypervisor 112 may filter messages that affect resources of an SDN switch 108 that are not associated with the network slice 110. In one embodiment, FlowVisor may be used for this purpose as a hypervisor 112. In one embodiment, the translation includes modifying IP addresses of messages exchanged between SDN switches 108 and SDN controllers 104. In particular, each hypervisor 112 controls access to a corresponding network slice 110 such that each SDN controller 104 can only control their own network slice 110 via control messages. To exert this access control, IP addresses of messages are modified to ensure that SDN controllers 104 only access SDN switches 108 within their network slice 110.

As used herein, messages exchanged between devices may be control messages used to manage the network slices 110, messages used to initiate connections between devices in the network system 100 (e.g., initiate a connection between the management server 106 and a SDN switch 108 or initiate a connection between a SDN switch 108 and a hypervisor 112), or any other similar type of message. The messages may be considered data packets or composed of data packets.

Although the OpenFlow protocol has been used here to describe messages exchanged between SDN controllers 104 and SDN switches 108, the use of translation by the hypervisors 112 allows the use of any set of protocols for communications between SDN controllers 104 and SDN switches 108. For example, the SDN controller 104₁ may use OpenFlow messages while the SDN switch 108₁ within the network slice 110₁ managed by the SDN controller 104₁ may use OpFlex for communications. In this example, the hypervisor 112₁ may translate control messages into a protocol understood by a recipient of the message (e.g., translate between OpenFlow and OpFlex).

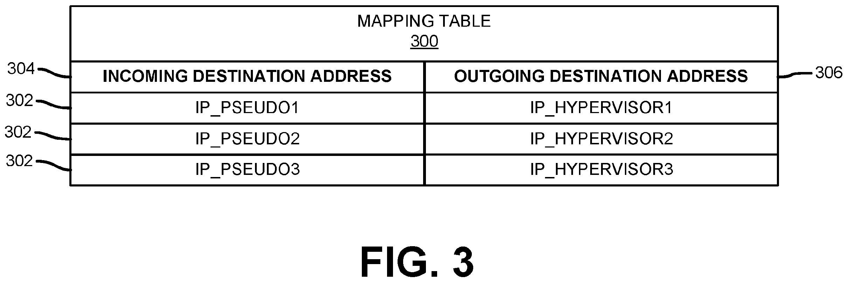

As shown in Figure 1, the operator network 102 may include a NAT device 114. The NAT device 114 may map one address space to another address space by modifying network address information in message headers while the messages are in transit. For example, as shown in Figure 1, the NAT device 114 may connect SDN switches 108 to hypervisors 112. This connection includes mapping destination addresses of messages transmitted by the hypervisors 112 (originally received from SDN controllers 104) to addresses of SDN switches 108 and mapping destination addresses of messages transmitted by the SDN switches 108 to addresses of hypervisors 112. In one embodiment, the NAT device 114 may include a mapping table which maps incoming destination addresses with outgoing destination addresses. For example, Figure 3 shows a mapping table 300 according to one example embodiment. As shown, the mapping table 300 includes a number of entries 302 and each entry 302 includes an incoming destination address 304 and an outgoing destination address 306. Upon receipt of a message, the NAT device 114 may determine an entry 302 in the mapping table 300 with an incoming destination address 304 that matches a destination address of the received message. Based on the determined entry 302, the NAT device 114 may replace the destination address in the received message with the outgoing destination address 306 of the determined entry 302 (i.e., the entry 302 with an incoming destination address 304 that matches a destination address of the message).

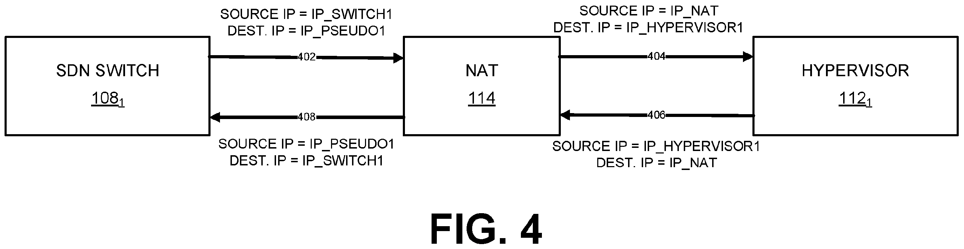

Figure 4 shows an example translation between the SDN switch 108₁ and the hypervisor 112₁ using the NAT device 114. As shown, the SDN switch 108₁ transmits a message 402 with a source address of IP_SWITCH1 (corresponding to SDN switch 108₁) and a destination address of IP_PSEUDO1. Using the mapping table 300, the NAT device 114 maps the destination address of IP_PSEUDO1 (incoming destination address 304) to the destination address of IP_HYPERVISOR1 (outgoing destination address 306) corresponding to the hypervisor 112₁ based on a corresponding entry 302 in the mapping table 300 configured by the management server 106. Accordingly, the NAT device 114 modifies the destination address of the message 402 to replace the destination address of IP_PSEUDO1 with the destination address of IP_HYPERVISOR1. Based on this modified destination address, the modified message 404 is transmitted to the hypervisor 112₁. In some embodiments, the source address of the message 402 may also be modified from the IP_SWITCH1 to IP_NAT (the address of the NAT device 114) such that the source address of the modified message 404 includes a source address of IP_NAT instead of IP_SWITCH1. In further embodiments, the port numbers of the Transmission Control Protocol (TCP) can be used to extend the available address space so that IP_NAT is complemented with a PORT_NAT.

Similarly, the hypervisor 112₁ may transmit a message 406 with a source address of IP_HYPFRVISOR1. Using a reverse mapping in the mapping table 300, the NAT device 114 may use the source address of IP_HYPERVISOR1 in the message 406 to determine the source address IP_PSEUDO1 for the modified message 408 that is transmitted to the SDN switch 108₁. In some embodiments, the NAT device 114 may use a reverse mapping in the mapping table 300 to determine the address IP_SWITCH1 based on the destination address IP_NAT in the message 406 transmitted by the hypervisor 112₁ and use the destination address IP_SWITCH1 for the modified message 408 that is transmitted to the SDN switch 108₁.

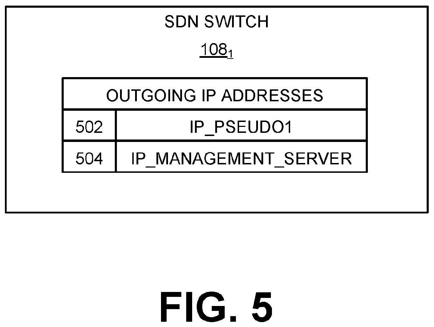

In one embodiment, the management server 106 may transmit translation instructions to add entries 302 to the mapping table 300 in response to receipt of a message from an SDN switch 108. For example, each SDN switch 108 may include a set of two or more outgoing IP addresses as shown in Figure 5. These outgoing IP addresses are static in the SDN switches 108 and may be manually added to SDN switches 108 (e.g., an administrator of the operator network 102 or a manufacturer of the SDN switch 108 may make initial configurations of outgoing IP addresses). For example, a first outgoing IP address 502 stored within the SDN switch 108₁ shown in Figure 5 is a pseudo IP address (e.g., IP_PSEUDO1). As used herein, a pseudo IP address is an IP address that is not yet assigned to a device in the network system 100 and no device in the network system 100 will ever self-associate with this address. However, as will be described below, the NAT device 114 may later associate a pseudo IP address with a device in the network system 100 even though the device associated with the pseudo IP address is unaware of this association. For example, the NAT device 114 associates the first outgoing IP address 502 with the hypervisor 112₁ of a network slice 110₁ associated with the SDN switch 108₁. As will be described in greater detail below, this association may not occur until after the SDN switch 108₁ has started up and has begun communicating with devices in the network system 100 and in particular with the management server 106. Although shown with a single pseudo IP address, a SDN switch 108 may include several outgoing IP addresses that are pseudo IP addresses. Accordingly, each SDN switch 108 may communicate with a set of SDN controllers 104 (e.g., one or more) via hypervisors 112.

In contrast to the first outgoing IP address 502 that may not be associated with a particular device in the network system 100 at startup of the SDN switch 108₁, the second outgoing IP address 504 may be associated with the management server 106 (e.g., IP_MANAGEMENT_SERVER). Upon start-up, the SDN switch 108₁ may begin transmitting messages using each of the outgoing IP addresses 502 and 504. For instance, in the example of Figure 5, the SDN switch 108₁ may transmit separate messages using each of the first outgoing IP address 502 and the second outgoing IP address 504. Each of the transmitted messages may be received by the NAT device 114 for translation and forwarding. In one embodiment, these messages transmitted by the SDN switch 108₁ at startup may be messages for beginning a handshake procedure to establish connections with respective devices (e.g., establishing a Transmission Control Protocol (TCP) connection with optional use of a Transport Layer Security (TLS) connection with the management server 106 and a hypervisor 112). In some embodiments, encrypted/secure connections (e.g., TCP + TLS connections) may only be made between external devices to the operator network 102. For example, SDN controllers 104 may connect to hypervisors 112 via encrypted channels while SDN switches 108 and hypervisors 112 may utilize unencrypted channels since SDN switches 108 and hypervisors 112 are in the same trusted zone (e.g., the network system 102).

With respect to a first message corresponding to the first outgoing IP address 502, the NAT device 114 may attempt to determine an entry 302 in a mapping table 300 with an incoming destination address 304 that matches a destination address of the first message (e.g., the first outgoing IP address 502). When the SDN switch 108₁ initially starts to connect to a hypervisor 112, the mapping table 300 may not include such an entry 302. In response to failing to find an entry 302 within the mapping table 300 associated with a destination address of the first message (i.e., the first outgoing IP address 502), the NAT device 114 may drop the first message without forwarding to another device in the network system 100. Based on the NAT device 114 dropping the first message and consequently the SDN switch 108₁ failing to receive an acknowledgement of receipt of the first message, the SDN switch 108₁ may enter a timeout period before trying to retransmit the first message using the first outgoing IP address 502.

With respect to a second message corresponding to the second outgoing IP address 504, an entry 302 may be determined in the mapping table 300 that includes an incoming destination address 304 that matches the destination address of the second message (e.g., the second outgoing IP address 504). Based on this determined entry 302, the destination address of the second message, which matches an incoming destination address 304 of the determined entry 302, may be modified to the outgoing destination address 306 of the determined entry 302. In this example, the outgoing destination address 306 of the determined entry 302 is associated with the management server 106. The modified second message may thereafter be forwarded to the management server 106 such that the SDN switch 108₁ may establish a connection with the management server 106 (e.g., a TCP with optional use of a TLS connection). Although described as the second message being transmitted to the management server via the NAT device 114, in some embodiments the second message may be transmitted directly to the management server 106 without moving through the NAT device 114.

In some embodiments, upon receipt of the second message, the management server 106 may check if a source of the second message is on an authorized list of source devices. For example, the management server 106 may be pre-configured with an authorized list of source devices that includes the SDN switch 108₁ and the NAT device 114 such that the management server 106 will establish a connection with these authorized devices. In this fashion, the management server 106 will not enable unauthorized devices (e.g., unauthorized or fake switches) to communicate with SDN controllers 104, hypervisors 112, etc.

After using a handshake routine to establish a connection with the management server 106, the management server 106 determines a hypervisor 112 for the SDN switch 108₁. In one embodiment, the management server 106 determines a hypervisor 112 for the SDN switch 108₁ based on capacity and/or availability of the hypervisors 112. For example, the hypervisors 112 may periodically transmit registration messages containing capacity and/or availability information to the management server 106. The management server 106 may use this information to determine a hypervisor 112 that is capable of handling communications between the SDN switch 108₁ and a SDN controller 104 (e.g., the SDN controller 104₁ corresponding to the network slice 110₁). In some embodiments, particularly embodiments in which cloud based hypervisors 112 are employed, the management server 106 may instantiate a new hypervisor 112 for use by the SDN switch 108₁. In some embodiments in which a hypervisor 112 has already be established for a network slice 110 in which the SDN switch 108₁ is part of, the management server 106 may determine that this established hypervisor 112 is to be used by the SDN switch 108₁.

Upon determining a hypervisor 112 for the SDN switch 108₁ (e.g., the hypervisor 112₁), the management server 106 configures the hypervisor 112. In one embodiment, this configuration may include configuring slicing policy for the attached SDN switches 108, where the slicing policy indicates types of functions or requests that are allowed in the network slice 110 and resources SDN controllers 104 can use in a network slice 110. In one embodiment, this configuration may include configuring access control for the hypervisor 112 (e.g., the set of devices that can access the hypervisor 112, including the NAT device 114, one or more controllers 104, and one or more SDN switches 108). For example, the hypervisor 112₁ may be configured to accept connections with the NAT device 114, the SDN controller 104₁, and/or the SDN switch 108₁. For purposes of illustration, the hypervisor 112₁ will be used to describe the functionality of the management server 106 in relation to the SDN switch 108₁.

After configuration of the hypervisor 112₁, the management server 106 transmits a translation instruction to the NAT device 114 to establish a new entry 302 in the mapping table 300. The new entry 302 indicates a mapping between the first outgoing IP address 502 and an address of the hypervisor 112₁. In particular, the incoming destination address 304 for the new entry 302 is set to the first outgoing IP address 502 of the SDN switch 108₁ (e.g., IP_PSEUDO1) and the outgoing destination address 308 is set to an address of the hypervisor 112₁ (e.g., IP_HYPERVISOR1). This new entry 302 will cause the NAT device 114 to modify all messages transmitted from the SDN switch 108₁ with a destination address of the first outgoing IP address 502 (e.g., IP_PSEUDO1) to include the address of the hypervisor 112₁ (e.g., IP_HYPERVISOR1). Accordingly, messages from the SDN switch 108₁ using the first outgoing IP address 502 will be forwarded by the NAT device 114 to the hypervisor 112₁.

As noted above, initial messages transmitted from the SDN switch 108₁ with the first outgoing IP address 502 (e.g., the first message) will be dropped by the NAT device 114 as the first outgoing IP address 502 does not match an incoming destination address 304 of an entry 302 in the mapping table 300. After a timeout period, the SDN switch 108₁ may retransmit the message with the first outgoing IP address 502 (e.g., the first message). Since the NAT device 114 now has an entry 302 with an incoming destination address 304 that matches the first outgoing IP address 502, the NAT device 114 modifies the message to include the address of the hypervisor 112₁ (e.g., as shown in Figure 4). As a result, messages with the first outgoing IP address 502 (e.g., IP_PSEUDO1) areassociated with the hypervisor 112₁ such that these messages are forwarded by the NAT device 114 to the hypervisor 112₁.

The SDN switch 108₁ may continue to exchange messages with the SDN controller 104₁ via the NAT device 114 and the hypervisor 112₁ such that the SDN controller 104₁ may manage resources of the SDN switch 108₁. The hypervisors 112 may be isolated from each other and each hypervisor 112 may deploy a specific policy and configuration for an associated network slice 110. Accordingly, the hypervisors 112 improve security in the network system 100 by ensuring SDN controllers 104 communicate with assigned/allocated SDN switches 108 and according to network slice 110 policy.

In one embodiment, the SDN switch 108₁ may continue to transmit messages to the management server 106. For example, the SDN switch 108₁ may transmit all messages to all outgoing IP addresses preconfigured in the SDN switch 108₁ (e.g., the first outgoing IP address 502 and the second outgoing IP address 504). In this embodiment, the management server 106 may use these received messages from the SDN switch 108₁ along with messages from other SDN switches 108 in the operator network 102 (and potentially other operator networks) to determine information regarding the network system 100 (e.g., topology information of devices in the network system 100 or policy changes to the network slices 110). Based on this information that is passively obtained by the management server 106, the management server 106 may determine a better hypervisor 112 for the SDN switch 108₁. For example, based on a change to a policy of the network slice 110₁ that is detected by the management server 106 based on messages from the SDN switch 108₁, the management server 106 may determine that the hypervisor 112₁ may no longer be suitable for the SDN switch 108₁ (e.g., the capacity of the hypervisor 112₁ may be insufficient for the new policy). Instead, the management server 106 may determine to move the SDN switch 108₁ to another hypervisor 112 in the network system 100. In some embodiments, this may include instantiating a new hypervisor 112.

In response to determining another hypervisor 112 for the SDN switch 108₁, for example the hypervisor 112₂, the management server 106 may transmit a translation instruction to the NAT device 114 to either modify a previous entry 302 in the mapping table 300 associated with the first outgoing IP address 502 of the SDN switch 108₁ or delete a previous entry 302 associated with the SDN switch 108₁ (e.g., an entry 302 with the first outgoing IP address 502 as the incoming destination address 304) and generate a new entry 302. The modified or new entry 302 includes an address of the hypervisor 112₂ for the outgoing destination address 306 such that messages transmitted from the SDN switch 108₁ using the first outgoing IP address 502 are forwarded to the hypervisor 112₂. In one embodiment, the SDN switch 108₁ may be unaware of the transition to the hypervisor 112₂. Accordingly, the SDN switch 108₁ may transmit messages that are dropped by the hypervisor 112₂ since a connection has not been established between the hypervisor 112₂ and the SDN switch 108₁. In this embodiment, the hypervisor 112₂may transmit a TCP reset message to the SDN switch 108₁ to cause the SDN switch 108₁ to establish a new connection with the hypervisor 112₂. Thereafter, a connection between the SDN switch 108₁ and the hypervisor 112₂ is established such that messages between the SDN switch 108₁ and the SDN controllers 104₂ and 104₃ is managed by the hypervisor 112₂.

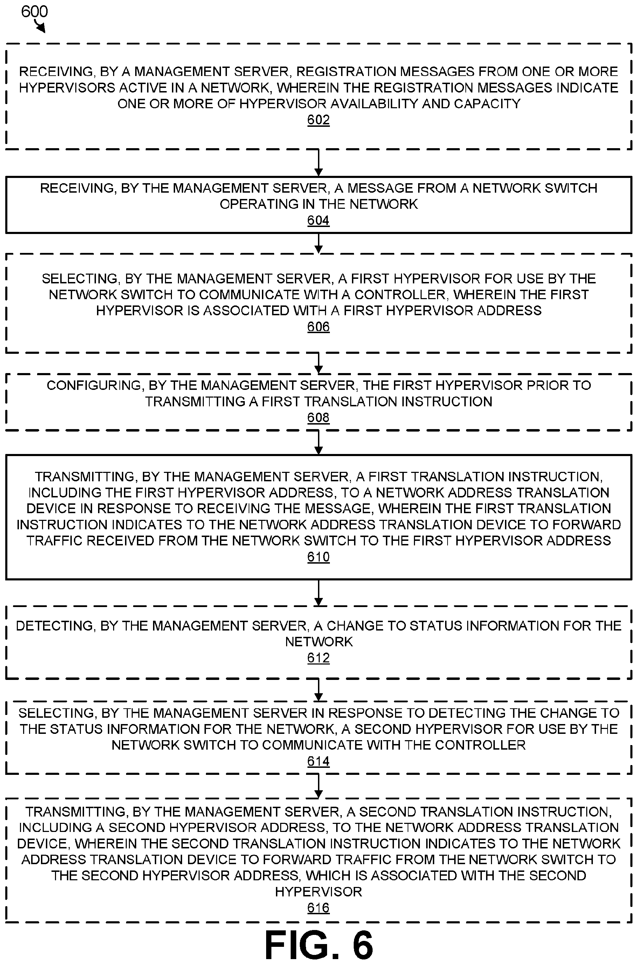

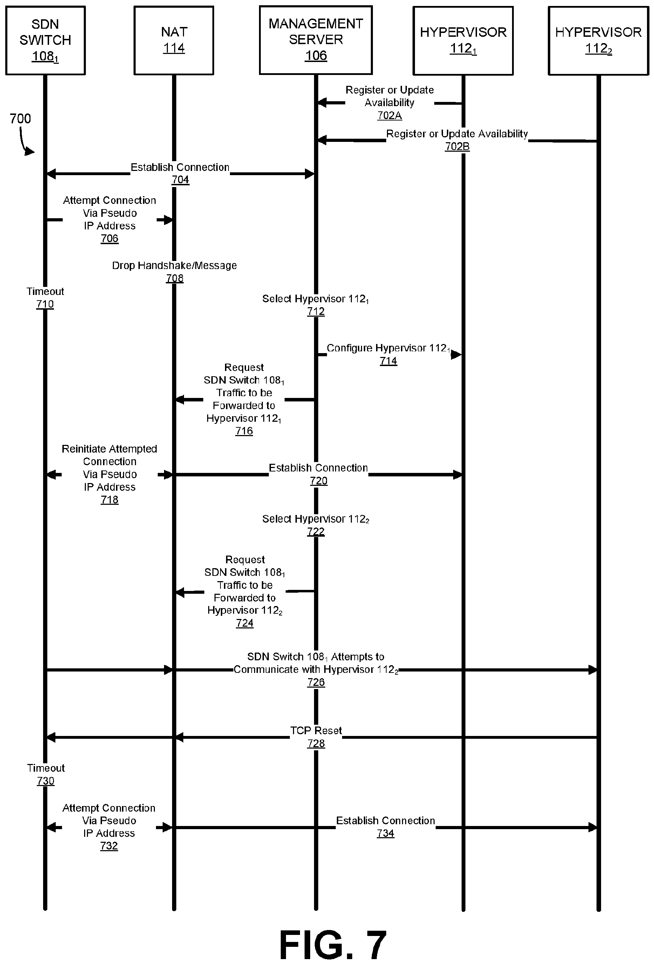

Turning to Figure 6, a method 600 for managing transmissions between SDN switches 108 and hypervisors 112 according to one embodiment will be described. As explained herein, the method 600 allows the management server 106 to dynamically control the network system 100 and in particular network slices 110 managed by SDN controllers 104 through the modification of address mappings in the NAT device 114. The method 600 will be described in relation to the example data exchange 700 shown in Figure 7 between several devices in the network system 100.

The method 600 commences at operation 602 with receipt by the management server 106 of registration messages from one or more hypervisors 112 active in an operator network 102 (items 702A and 702B). In one embodiment, the registration messages indicate one or more of availability and capacity of the hypervisor 112 that transmitted the registration message. Each registration messages registers the hypervisor 112 with the management server 106, including an indication of initial availability and capacity, or the hypervisor 112 may already be registered with the management server 106 and the registration message updates availability and capacity of the hypervisor 112. In one embodiment, the management server 106 may be connected to the NAT device 114 such that the registration messages are forwarded to the management server 106 from the hypervisors 112 via the NAT device 114. Although described as the management server 106 receiving registration messages from the hypervisors 112, in some embodiments, the availability and/or capacity information for a hypervisor 112 may be manually entered into the management server 106 by an administrator of the management server 106 or the operator network 102.

At operation 604, the management server 106 may receive a message from the SDN switch 108₁ to establish a connection between the management server 106 and the SDN switch 108₁ (item 704). In one embodiment, the SDN switch 108₁ may be configured with two outgoing IP addresses associated with devices with which the SDN switch 108₁ will establish connections: a first outgoing IP address 502 and a second outgoing IP address 504. The first outgoing IP address 502 is a pseudo IP address and the second outgoing IP address 504 may be an IP address of the management server 106. The first outgoing IP address 502 allows the SDN switch 108₁ to establish a connection (e.g., a TCP connection alone or a TCP + TLS connection) with a hypervisor 112 via the NAT device 114 (once an appropriate entry 302 is present in the mapping table 300) while the second outgoing IP address 504 allows the SDN switch 108₁ to establish a connection (e.g., a TCP connection or a TCP + TLS connection) with the management server 106. Until an appropriate entry 302 is present in the mapping table 300 of the NAT device 114, the NAT device 114 may drop (item 708) the attempted connection/handshake (item 706) and the SDN switch 108₁ may enter a timeout period (item 710) before retrying to establish a connection. In one embodiment, the message received from the SDN switch 108₁ may cause the management server 106 to initiate the establishment of a connection with the SDN switch 108₁.

At operation 606, the management server 106 selects a hypervisor 112 for the SDN switch 108₁ in response to a message from the SDN switch 108₁ (item 712). The hypervisor 112 selected by the management server 106 is used to manage communications between the SDN controller 104₁ of the network slice 110₁ that the SDN switch 108₁ is associated. For example, the network slice 110₁ may be composed of a number of SDN switches 108 (or resources of these SDN switches 108), including the SDN switch 108₁. The management server 106 selects a hypervisor 112 at operation 606 based on availability and/or capacity information received from the hypervisors 112 or instantiate a new hypervisor 112 for use by the network slice 110₁. In the example data exchange 700 and as used below to describe the method 600, the management server 106 selects the hypervisor 112₁ at operation 606.

At operation 608, the management server 106 configures the selected hypervisor 112₁ (item 714). In one embodiment, this configuration may include configuring access control for the hypervisor 112₁ (e.g., the set of devices that can access the hypervisor 112₁, including the NAT device 114, one or more controllers 104, and one or more SDN switches 108). In one embodiment, this configuration causes the hypervisor 112₁ to initiate and establish a connection with a SDN controller 104 (e.g., the controller 104₁).

At operation 610, the management server 106 transmits a translation instruction to the NAT device 114 (item 716). The translation instruction includes an address of the hypervisor 112₁ and may indicate to the NAT device 114 to forward messages received from the SDN switch 108₁ to the address of the hypervisor 112₁. In response to the translation instruction, the NAT device 114 may generate or update an entry 302 in the mapping table 300 to reflect a mapping between the first outgoing IP address 502 of the SDN switch 108₁ and the address of the hypervisor 112₁. Following a timeout period of the SDN switch 108₁ (item 710), the SDN switch 108₁ may re-attempt to establish a connection with the hypervisor 112₁ via the NAT device 114 (item 718). In this case, since an entry 302 is present in the mapping table 300 of the NAT device 114, the NAT device 114 forwards messages transmitted by the SDN switch 108₁ using the first outgoing IP address 502 to the hypervisor 112₁ such that the hypervisor 112₁ establishes a connection with the SDN switch 108₁ (item 720) and the hypervisor 112₁ manages communications between the SDN controller 104₁ and the SDN switch 108₁.

After establishment of connections with both the management server 106 and the hypervisor 112₁, the SDN switch 108₁ may continue to transmit messages to both the hypervisor 112₁ and the management server 106 via the first outgoing IP address 502 and the second outgoing IP address 504, respectively. At operation 612, the management server 106 may detect a change to status information of the network system 100 (e.g., topology information of devices in the network system 100 or a policy change to the network slices 110). Based on this information that is passively obtained by the management server 106, the management server 106 may determine a new hypervisor 112 for the SDN switch 108₁ at operation 614. For example, the hypervisor 112₂ may be selected to replace hypervisor 112₁ for the SDN switch 108₁ (item 722).

After selecting the hypervisor 112₂ for the SDN switch 108₁, the management server 106 transmits a translation instruction to the NAT device 114 at operation 616 (item 724). The translation instruction transmitted to the NAT device 114 may either cause the NAT device 114 to modify a previous entry 302 in the mapping table 300 associated with the first outgoing IP address 502 of the SDN switch 108₁ or delete the previous entry 302 and generate a new entry 302. The modified or new entry 302 includes an address of the hypervisor 112₂ for the outgoing destination address 306 such that messages transmitted from the SDN switch 108₁ using the first outgoing IP address 502 are forwarded to the hypervisor 112₂.

In one embodiment, the SDN switch 108₁ may be unaware of the transition to the hypervisor 112₂. Accordingly, the SDN switch 108₁ may transmit messages (item 726) that are dropped by the hypervisor 112₂ since a connection has not been established between the hypervisor 112₂ and the SDN switch 108₁. In this embodiment, the hypervisor 112₂ may transmit a TCP reset message to the SDN switch 108₁ (item 728) to cause the SDN switch 108₁ to enter a timeout period (item 730) before transmitting messages (item 732) to establish a connection with the hypervisor 112₂ (item 734). Thereafter, the connection between the SDN switch 108₁ and the hypervisor 112₂ is established such that messages between the SDN switch 108₁ and the SDN controllers 104₂ and 104₃ are managed by the hypervisor 112₂.

As described herein the management server 106 dynamically manages connections between hypervisors 112 and SDN switches 108 and without the need to reconfigure the SDN switches 108 to account for or affect a change in the network system 100. In particular, by configuring the SDN switches 108 with a fixed set of outgoing IP addresses and allowing the management server 106 to control which of the fixed outgoing IP addresses is mapped to a hypervisor 112 via the NAT device 114, each SDN switch 108 does not need to be reconfigured to account for or affect a change to a policy of a network slice 110 or a topology change in the network system 100. Since there may be numerous SDN switches 108 (e.g., hundreds or thousands), the ability to change hypervisors 112 without needing to reconfigure each affected SDN switch 108 reduces overhead and allows for a more dynamic network system 100.

As noted above, the system and methods described herein may be performed by one or more electronic devices. An electronic device stores and transmits (internally and/or with other electronic devices over a network) code (which is composed of software instructions and which is sometimes referred to as computer program code or a computer program) and/or data using machine-readable media (also called computer-readable media), such as machine-readable storage media (e.g., magnetic disks, optical disks, solid state drives, read only memory (ROM), flash memory devices, phase change memory) and machine-readable transmission media (also called a carrier) (e.g., electrical, optical, radio, acoustical or other form of propagated signals - such as carrier waves, infrared signals). Thus, an electronic device (e.g., a computer) includes hardware and software, such as a set of one or more processors (e.g., wherein a processor is a microprocessor, controller, microcontroller, central processing unit, digital signal processor, application specific integrated circuit, field programmable gate array, other electronic circuitry, a combination of one or more of the preceding) coupled to one or more machine-readable storage media to store code for execution on the set of processors and/or to store data. For instance, an electronic device may include non-volatile memory containing the code since the non-volatile memory can persist code/data even when the electronic device is turned off (when power is removed), and while the electronic device is turned on that part of the code that is to be executed by the processor(s) of that electronic device is typically copied from the slower non-volatile memory into volatile memory (e.g., dynamic random access memory (DRAM), static random access memory (SRAM)) of that electronic device. Typical electronic devices also include a set or one or more physical network interface(s) (NI(s)) to establish network connections (to transmit and/or receive code and/or data using propagating signals) with other electronic devices. For example, the set of physical NIs (or the set of physical NI(s) in combination with the set of processors executing code) may perform any formatting, coding, or translating to allow the electronic device to send and receive data whether over a wired and/or a wireless connection. In some embodiments, a physical NI may comprise radio circuitry capable of receiving data from other electronic devices over a wireless connection and/or sending data out to other devices via a wireless connection. This radio circuitry may include transmitter(s), receiver(s), and/or transceiver(s) suitable for radiofrequency communication. The radio circuitry may convert digital data into a radio signal having the appropriate parameters (e.g., frequency, timing, channel, bandwidth, etc.). The radio signal may then be transmitted via antennas to the appropriate recipient(s). In some embodiments, the set of physical NI(s) may comprise network interface controller(s) (NICs), also known as a network interface card, network adapter, or local area network (LAN) adapter. The NIC(s) may facilitate in connecting the electronic device to other electronic devices allowing them to communicate via wire through plugging in a cable to a physical port connected to a NIC. One or more parts of an embodiment may be implemented using different combinations of software, firmware, and/or hardware.

A network device (ND) is an electronic device that communicatively interconnects other electronic devices on the network (e.g., other network devices, end-user devices). Some network devices are "multiple services network devices" that provide support for multiple networking functions (e.g., routing, bridging, switching, Layer 2 aggregation, session border control, Quality of Service, and/or subscriber management), and/or provide support for multiple application services (e.g., data, voice, and video).

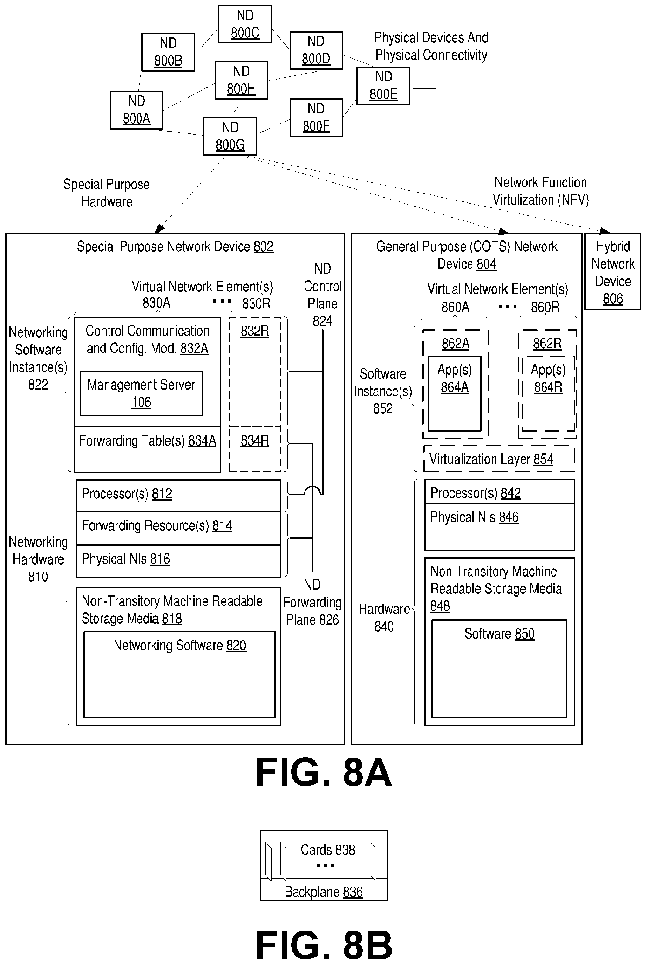

Figure 8A illustrates connectivity between network devices (NDs) within an exemplary network, as well as three exemplary implementations of the NDs, according to some embodiments. Figure 8A shows NDs 800A-H, and their connectivity by way of lines between 800A-800B, 800B-800C, 800C-800D, 800D-800E, 800E-800F, 800F-800G, and 800A-800G, as well as between 800H and each of 800A, 800C, 800D, and 800G. These NDs are physical devices, and the connectivity between these NDs can be wireless or wired (often referred to as a link). An additional line extending from NDs 800A, 800E, and 800F illustrates that these NDs act as ingress and egress points for the network (and thus, these NDs are sometimes referred to as edge NDs; while the other NDs may be called core NDs).

Two of the exemplary ND implementations in Figure 8A are: 1) a special-purpose network device 802 that uses custom application-specific integrated-circuits (ASICs) and a special-purpose operating system (OS); and 2) a general purpose network device 804 that uses common off-the-shelf (COTS) processors and a standard OS.

The special-purpose network device 802 includes networking hardware 810 comprising a set of one or more processor(s) 812, forwarding resource(s) 814 (which typically include one or more ASICs and/or network processors), and physical network interfaces (NIs) 816 (through which network connections are made, such as those shown by the connectivity between NDs 800A-H), as well as non-transitory machine readable storage media 818 having stored therein networking software 820. During operation, the networking software 820 may be executed by the networking hardware 810 to instantiate a set of one or more networking software instance(s) 822. Each of the networking software instance(s) 822, and that part of the networking hardware 810 that executes that network software instance (be it hardware dedicated to that networking software instance and/or time slices of hardware temporally shared by that networking software instance with others of the networking software instance(s) 822), form a separate virtual network element 830A-R. Each of the virtual network element(s) (VNEs) 830A-R includes a control communication and configuration module 832A-R (sometimes referred to as a local control module or control communication module) and forwarding table(s) 834A-R, such that a given virtual network element (e.g., 830A) includes the control communication and configuration module (e.g., 832A), a set of one or more forwarding table(s) (e.g., 834A), and that portion of the networking hardware 810 that executes the virtual network element (e.g., 830A).

The special-purpose network device 802 is often physically and/or logically considered to include: 1) a ND control plane 824 (sometimes referred to as a control plane) comprising the processor(s) 812 that execute the control communication and configuration module(s) 832A-R; and 2) a ND forwarding plane 826 (sometimes referred to as a forwarding plane, a data plane, or a media plane) comprising the forwarding resource(s) 814 that utilize the forwarding table(s) 834A-R and the physical NIs 816. By way of example, where the ND is a router (or is implementing routing functionality), the ND control plane 824 (the processor(s) 812 executing the control communication and configuration module(s) 832A-R) is typically responsible for participating in controlling how data (e.g., packets) is to be routed (e.g., the next hop for the data and the outgoing physical NI for that data) and storing that routing information in the forwarding table(s) 834A-R, and the ND forwarding plane 826 is responsible for receiving that data on the physical NIs 816 and forwarding that data out the appropriate ones of the physical NIs 816 based on the forwarding table(s) 834A-R.

Figure 8B illustrates an exemplary way to implement the special-purpose network device 802 according to some embodiments. Figure 8B shows a special-purpose network device including cards 838 (typically hot pluggable). While in some embodiments the cards 838 are of two types (one or more that operate as the ND forwarding plane 826 (sometimes called line cards), and one or more that operate to implement the ND control plane 824 (sometimes called control cards)), alternative embodiments may combine functionality onto a single card and/or include additional card types (e.g., one additional type of card is called a service card, resource card, or multi-application card). A service card can provide specialized processing (e.g., Layer 4 to Layer 7 services (e.g., firewall, Internet Protocol Security (IPsec), Secure Sockets Layer (SSL) / Transport Layer Security (TLS), Intrusion Detection System (IDS), peer-to-peer (P2P), Voice over IP (VoIP) Session Border Controller, Mobile Wireless Gateways (Gateway General Packet Radio Service (GPRS) Support Node (GGSN), Evolved Packet Core (EPC) Gateway)). By way of example, a service card may be used to terminate IPsec tunnels and execute the attendant authentication and encryption algorithms. These cards are coupled together through one or more interconnect mechanisms illustrated as backplane 836 (e.g., a first full mesh coupling the line cards and a second full mesh coupling all of the cards).

Returning to Figure 8A, the general purpose network device 804 includes hardware 840 comprising a set of one or more processor(s) 842 (which are often COTS processors) and physical NIs 846, as well as non-transitory machine readable storage media 848 having stored therein software 850. During operation, the processor(s) 842 execute the software 850 to instantiate one or more sets of one or more applications 864A-R. While one embodiment does not implement virtualization, alternative embodiments may use different forms of virtualization. For example, in one such alternative embodiment the virtualization layer 854 represents the kernel of an operating system (or a shim executing on a base operating system) that allows for the creation of multiple instances 862A-R called software containers that may each be used to execute one (or more) of the sets of applications 864A-R; where the multiple software containers (also called virtualization engines, virtual private servers, or jails) are user spaces (typically a virtual memory space) that are separate from each other and separate from the kernel space in which the operating system is run; and where the set of applications running in a given user space, unless explicitly allowed, cannot access the memory of the other processes. In another such alternative embodiment the virtualization layer 854 represents a hypervisor (sometimes referred to as a virtual machine monitor (VMM)) or a hypervisor executing on top of a host operating system, and each of the sets of applications 864A-R is run on top of a guest operating system within an instance 862A-R called a virtual machine (which may in some cases be considered a tightly isolated form of software container) that is run on top of the hypervisor - the guest operating system and application may not know they are running on a virtual machine as opposed to running on a "bare metal" host electronic device, or through para-virtualization the operating system and/or application may be aware of the presence of virtualization for optimization purposes. In yet other alternative embodiments, one, some or all of the applications are implemented as unikernel(s), which can be generated by compiling directly with an application only a limited set of libraries (e.g., from a library operating system (LibOS) including drivers/libraries of OS services) that provide the particular OS services needed by the application. As a unikernel can be implemented to run directly on hardware 840, directly on a hypervisor (in which case the unikernel is sometimes described as running within a LibOS virtual machine), or in a software container, embodiments can be implemented fully with unikernels running directly on a hypervisor represented by virtualization layer 854, unikernels running within software containers represented by instances 862A-R, or as a combination of unikernels and the above-described techniques (e.g., unikernels and virtual machines both run directly on a hypervisor, unikernels and sets of applications that are run in different software containers).

The instantiation of the one or more sets of one or more applications 864A-R, as well as virtualization if implemented, are collectively referred to as software instance(s) 852. Each set of applications 864A-R, corresponding virtualization construct (e.g., instance 862A-R) if implemented, and that part of the hardware 840 that executes them (be it hardware dedicated to that execution and/or time slices of hardware temporally shared), forms a separate virtual network element(s) 860A-R.

The virtual network element(s) 860A-R perform similar functionality to the virtual network element(s) 830A-R - e.g., similar to the control communication and configuration module(s) 832A and forwarding table(s) 834A (this virtualization of the hardware 840 is sometimes referred to as network function virtualization (NFV)). Thus, NFV may be used to consolidate many network equipment types onto industry standard high volume server hardware, physical switches, and physical storage, which could be located in Data centers, NDs, and customer premise equipment (CPE). While embodiments are illustrated with each instance 862A-R corresponding to one VNE 860A-R, alternative embodiments may implement this correspondence at a finer level granularity (e.g., line card virtual machines virtualize line cards, control card virtual machine virtualize control cards, etc.); it should be understood that the techniques described herein with reference to a correspondence of instances 862A-R to VNEs also apply to embodiments where such a finer level of granularity and/or unikernels are used.

In certain embodiments, the virtualization layer 854 includes a virtual switch that provides similar forwarding services as a physical Ethernet switch. Specifically, this virtual switch forwards traffic between instances 862A-R and the physical NI(s) 846, as well as optionally between the instances 862A-R; in addition, this virtual switch may enforce network isolation between the VNEs 860A-R that by policy are not permitted to communicate with each other (e.g., by honoring virtual local area networks (VLANs)).

The third exemplary ND implementation in Figure 8A is a hybrid network device 806, which includes both custom ASICs/special-purpose OS and COTS processors/standard OS in a single ND or a single card within an ND. In certain embodiments of such a hybrid network device, a platform VM (i.e., a VM that that implements the functionality of the special-purpose network device 802) could provide for para-virtualization to the networking hardware present in the hybrid network device 806.

Regardless of the above exemplary implementations of an ND, when a single one of multiple VNEs implemented by an ND is being considered (e.g., only one of the VNEs is part of a given virtual network) or where only a single VNE is currently being implemented by an ND, the shortened term network element (NE) is sometimes used to refer to that VNE. Also in all of the above exemplary implementations, each of the VNEs (e.g., VNE(s) 830A-R, VNEs 860A-R, and those in the hybrid network device 806) receives data on the physical NIs (e.g., 816, 846) and forwards that data out the appropriate ones of the physical NIs (e.g., 816, 846). For example, a VNE implementing IP router functionality forwards IP packets on the basis of some of the IP header information in the IP packet; where IP header information includes source IP address, destination IP address, source port, destination port (where "source port" and "destination port" refer herein to protocol ports, as opposed to physical ports of a ND), transport protocol (e.g., user datagram protocol (UDP), Transmission Control Protocol (TCP), and differentiated services code point (DSCP) values.

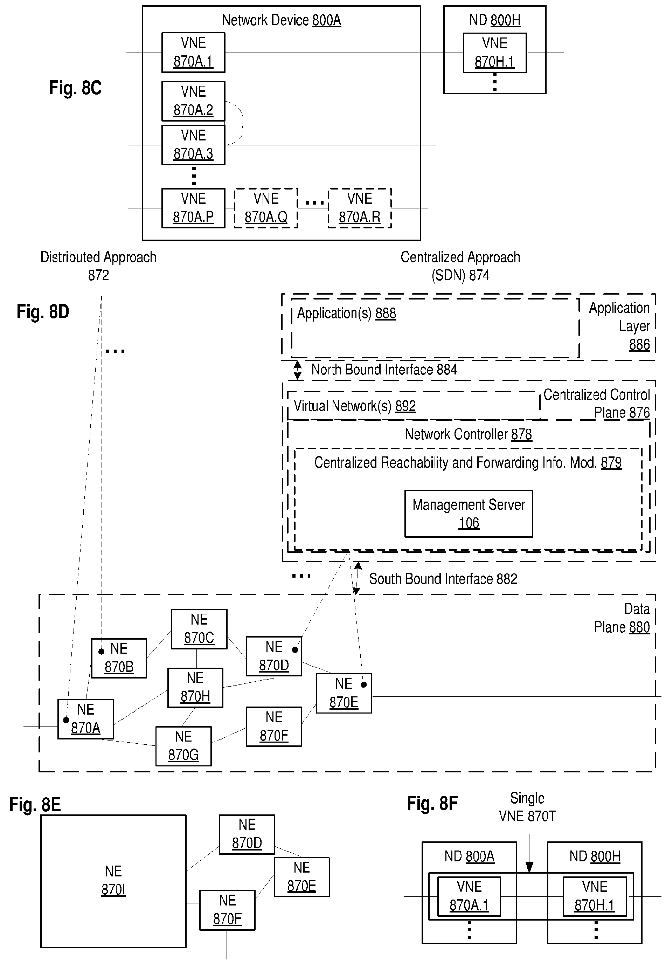

Figure 8C illustrates various exemplary ways in which VNEs may be coupled according to some embodiments. Figure 8C shows VNEs 870A.1-870A.P (and optionally VNEs 870A.Q-870A.R) implemented in ND 800A and VNE 870H.1 in ND 800H. In Figure 8C, VNEs 870A.1-P are separate from each other in the sense that they can receive packets from outside ND 800A and forward packets outside of ND 800A; VNE 870A.1 is coupled with VNE 870H. 1, and thus they communicate packets between their respective NDs; VNE 870A.2-870A.3 may optionally forward packets between themselves without forwarding them outside of the ND 800A; and VNE 870A.P may optionally be the first in a chain of VNEs that includes VNE 870A.Q followed by VNE 870A.R (this is sometimes referred to as dynamic service chaining, where each of the VNEs in the series of VNEs provides a different service - e.g., one or more layer 4-7 network services). While Figure 8C illustrates various exemplary relationships between the VNEs, alternative embodiments may support other relationships (e.g., more/fewer VNEs, more/fewer dynamic service chains, multiple different dynamic service chains with some common VNEs and some different VNEs).

The NDs of Figure 8A, for example, may form part of the Internet or a private network; and other electronic devices (not shown; such as end user devices including workstations, laptops, netbooks, tablets, palm tops, mobile phones, smartphones, phablets, multimedia phones, Voice Over Internet Protocol (VOIP) phones, terminals, portable media players, GPS units, wearable devices, gaming systems, set-top boxes, Internet enabled household appliances) may be coupled to the network (directly or through other networks such as access networks) to communicate over the network (e.g., the Internet or virtual private networks (VPNs) overlaid on (e.g., tunneled through) the Internet) with each other (directly or through servers) and/or access content and/or services. Such content and/or services are typically provided by one or more servers (not shown) belonging to a service/content provider or one or more end user devices (not shown) participating in a peer-to-peer (P2P) service, and may include, for example, public webpages (e.g., free content, store fronts, search services), private webpages (e.g., username/password accessed webpages providing email services), and/or corporate networks over VPNs. For instance, end user devices may be coupled (e.g., through customer premise equipment coupled to an access network (wired or wirelessly)) to edge NDs, which are coupled (e.g., through one or more core NDs) to other edge NDs, which are coupled to electronic devices acting as servers. However, through compute and storage virtualization, one or more of the electronic devices operating as the NDs in Figure 8A may also host one or more such servers (e.g., in the case of the general purpose network device 804, one or more of the software instances 862A-R may operate as servers; the same would be true for the hybrid network device 806; in the case of the special-purpose network device 802, one or more such servers could also be run on a virtualization layer executed by the processor(s) 812); in which case the servers are said to be co-located with the VNEs of that ND.

A virtual network is a logical abstraction of a physical network (such as that in Figure 8A) that provides network services (e.g., L2 and/or L3 services). A virtual network can be implemented as an overlay network (sometimes referred to as a network virtualization overlay) that provides network services (e.g., layer 2 (L2, data link layer) and/or layer 3 (L3, network layer) services) over an underlay network (e.g., an L3 network, such as an Internet Protocol (IP) network that uses tunnels (e.g., generic routing encapsulation (GRE), layer 2 tunneling protocol (L2TP), IPSec) to create the overlay network).

A network virtualization edge (NVE) sits at the edge of the underlay network and participates in implementing the network virtualization; the network-facing side of the NVE uses the underlay network to tunnel frames to and from other NVEs; the outward-facing side of the NVE sends and receives data to and from systems outside the network. A virtual network instance (VNI) is a specific instance of a virtual network on a NVE (e.g., a NE/VNE on an ND, a part of a NE/VNE on a ND where that NE/VNE is divided into multiple VNEs through emulation); one or more VNIs can be instantiated on an NVE (e.g., as different VNEs on an ND). A virtual access point (VAP) is a logical connection point on the NVE for connecting external systems to a virtual network; a VAP can be physical or virtual ports identified through logical interface identifiers (e.g., a VLAN ID).

Examples of network services include: 1) an Ethernet LAN emulation service (an Ethernet-based multipoint service similar to an Internet Engineering Task Force (IETF) Multiprotocol Label Switching (MPLS) or Ethernet VPN (EVPN) service) in which external systems are interconnected across the network by a LAN environment over the underlay network (e.g., an NVE provides separate L2 VNIs (virtual switching instances) for different such virtual networks, and L3 (e.g., IP/MPLS) tunneling encapsulation across the underlay network); and 2) a virtualized IP forwarding service (similar to IETF IP VPN (e.g., Border Gateway Protocol (BGP)/MPLS IPVPN) from a service definition perspective) in which external systems are interconnected across the network by an L3 environment over the underlay network (e.g., an NVE provides separate L3 VNIs (forwarding and routing instances) for different such virtual networks, and L3 (e.g., IP/MPLS) tunneling encapsulation across the underlay network)). Network services may also include quality of service capabilities (e.g., traffic classification marking, traffic conditioning and scheduling), security capabilities (e.g., filters to protect customer premises from network - originated attacks, to avoid malformed route announcements), and management capabilities (e.g., full detection and processing).

Fig. 8D illustrates a network with a single network element on each of the NDs of Figure 8A, and within this straight forward approach contrasts a traditional distributed approach (commonly used by traditional routers) with a centralized approach for maintaining reachability and forwarding information (also called network control), according to some embodiments. Specifically, Figure 8D illustrates network elements (NEs) 870A-H with the same connectivity as the NDs 800A-H of Figure 8A.

Figure 8D illustrates that the distributed approach 872 distributes responsibility for generating the reachability and forwarding information across the NEs 870A-H; in other words, the process of neighbor discovery and topology discovery is distributed.

For example, where the special-purpose network device 802 is used, the control communication and configuration module(s) 832A-R of the ND control plane 824 typically include a reachability and forwarding information module to implement one or more routing protocols (e.g., an exterior gateway protocol such as Border Gateway Protocol (BGP), Interior Gateway Protocol(s) (IGP) (e.g., Open Shortest Path First (OSPF), Intermediate System to Intermediate System (IS-IS), Routing Information Protocol (RIP), Label Distribution Protocol (LDP), Resource Reservation Protocol (RSVP) (including RSVP-Traffic Engineering (TE): Extensions to RSVP for LSP Tunnels and Generalized Multi-Protocol Label Switching (GMPLS) Signaling RSVP-TE)) that communicate with other NEs to exchange routes, and then selects those routes based on one or more routing metrics. Thus, the NEs 870A-H (e.g., the processor(s) 812 executing the control communication and configuration module(s) 832A-R) perform their responsibility for participating in controlling how data (e.g., packets) is to be routed (e.g., the next hop for the data and the outgoing physical NI for that data) by distributively determining the reachability within the network and calculating their respective forwarding information. Routes and adjacencies are stored in one or more routing structures (e.g., Routing Information Base (RIB), Label Information Base (LIB), one or more adjacency structures) on the ND control plane 824. The ND control plane 824 programs the ND forwarding plane 826 with information (e.g., adjacency and route information) based on the routing structure(s). For example, the ND control plane 824 programs the adjacency and route information into one or more forwarding table(s) 834A-R (e.g., Forwarding Information Base (FIB), Label Forwarding Information Base (LFIB), and one or more adjacency structures) on the ND forwarding plane 826. For layer 2 forwarding, the ND can store one or more bridging tables that are used to forward data based on the layer 2 information in that data. While the above example uses the special-purpose network device 802, the same distributed approach 872 can be implemented on the general purpose network device 804 and the hybrid network device 806.

Figure 8D illustrates that a centralized approach 874 (also known as software defined networking (SDN)) that decouples the system that makes decisions about where traffic is sent from the underlying systems that forwards traffic to the selected destination. The illustrated centralized approach 874 has the responsibility for the generation of reachability and forwarding information in a centralized control plane 876 (sometimes referred to as a SDN control module, controller, network controller, OpenFlow controller, SDN controller, control plane node, network virtualization authority, or management control entity), and thus the process of neighbor discovery and topology discovery is centralized. The centralized control plane 876 has a south bound interface 882 with a data plane 880 (sometime referred to the infrastructure layer, network forwarding plane, or forwarding plane (which should not be confused with a ND forwarding plane)) that includes the NEs 870A-H (sometimes referred to as switches, forwarding elements, data plane elements, or nodes). The centralized control plane 876 includes a network controller 878, which includes a centralized reachability and forwarding information module 879 that determines the reachability within the network and distributes the forwarding information to the NEs 870A-H of the data plane 880 over the south bound interface 882 (which may use the OpenFlow protocol). Thus, the network intelligence is centralized in the centralized control plane 876 executing on electronic devices that are typically separate from the NDs.

For example, where the special-purpose network device 802 is used in the data plane 880, each of the control communication and configuration module(s) 832A-R of the ND control plane 824 typically include a control agent that provides the VNE side of the south bound interface 882. In this case, the ND control plane 824 (the processor(s) 812 executing the control communication and configuration module(s) 832A-R) performs its responsibility for participating in controlling how data (e.g., packets) is to be routed (e.g., the next hop for the data and the outgoing physical NI for that data) through the control agent communicating with the centralized control plane 876 to receive the forwarding information (and in some cases, the reachability information) from the centralized reachability and forwarding information module 879 (it should be understood that in some embodiments, the control communication and configuration module(s) 832A-R, in addition to communicating with the centralized control plane 876, may also play some role in determining reachability and/or calculating forwarding information - albeit less so than in the case of a distributed approach; such embodiments are generally considered to fall under the centralized approach 874, but may also be considered a hybrid approach).

While the above example uses the special-purpose network device 802, the same centralized approach 874 can be implemented with the general purpose network device 804 (e.g., each of the VNE 860A-R performs its responsibility for controlling how data (e.g., packets) is to be routed (e.g., the next hop for the data and the outgoing physical NI for that data) by communicating with the centralized control plane 876 to receive the forwarding information (and in some cases, the reachability information) from the centralized reachability and forwarding information module 879; it should be understood that in some embodiments, the VNEs 860A-R, in addition to communicating with the centralized control plane 876, may also play some role in determining reachability and/or calculating forwarding information - albeit less so than in the case of a distributed approach) and the hybrid network device 806. In fact, the use of SDN techniques can enhance the NFV techniques typically used in the general purpose network device 804 or hybrid network device 806 implementations as NFV is able to support SDN by providing an infrastructure upon which the SDN software can be run, and NFV and SDN both aim to make use of commodity server hardware and physical switches.

Figure 8D also shows that the centralized control plane 876 has a north bound interface 884 to an application layer 886, in which resides application(s) 888. The centralized control plane 876 has the ability to form virtual networks 892 (sometimes referred to as a logical forwarding plane, network services, or overlay networks (with the NEs 870A-H of the data plane 880 being the underlay network)) for the application(s) 888. Thus, the centralized control plane 876 maintains a global view of all NDs and configured NEs/VNEs, and it maps the virtual networks to the underlying NDs efficiently (including maintaining these mappings as the physical network changes either through hardware (ND, link, or ND component) failure, addition, or removal).

While Figure 8D shows the distributed approach 872 separate from the centralized approach 874, the effort of network control may be distributed differently or the two combined in certain embodiments. For example: 1) embodiments may generally use the centralized approach (SDN) 874, but have certain functions delegated to the NEs (e.g., the distributed approach may be used to implement one or more of fault monitoring, performance monitoring, protection switching, and primitives for neighbor and/or topology discovery); or 2) embodiments may perform neighbor discovery and topology discovery via both the centralized control plane and the distributed protocols, and the results compared to raise exceptions where they do not agree. Such embodiments are generally considered to fall under the centralized approach 874, but may also be considered a hybrid approach.

While Figure 8D illustrates the simple case where each of the NDs 800A-H implements a single NE 870A-H, it should be understood that the network control approaches described with reference to Figure 8D also work for networks where one or more of the NDs 800A-H implement multiple VNEs (e.g., VNEs 830A-R, VNEs 860A-R, those in the hybrid network device 806). Alternatively or in addition, the network controller 878 may also emulate the implementation of multiple VNEs in a single ND. Specifically, instead of (or in addition to) implementing multiple VNEs in a single ND, the network controller 878 may present the implementation of a VNE/NE in a single ND as multiple VNEs in the virtual networks 892 (all in the same one of the virtual network(s) 892, each in different ones of the virtual network(s) 892, or some combination). For example, the network controller 878 may cause an ND to implement a single VNE (a NE) in the underlay network, and then logically divide up the resources of that NE within the centralized control plane 876 to present different VNEs in the virtual network(s) 892 (where these different VNEs in the overlay networks are sharing the resources of the single VNE/NE implementation on the ND in the underlay network).

On the other hand, Figures 8E and 8F respectively illustrate exemplary abstractions of NEs and VNEs that the network controller 878 may present as part of different ones of the virtual networks 892. Figure 8E illustrates the simple case of where each of the NDs 800A-H implements a single NE 870A-H (see Figure 8D), but the centralized control plane 876 has abstracted multiple of the NEs in different NDs (the NEs 870A-C and G-H) into (to represent) a single NE 870I in one of the virtual network(s) 892 of Figure 8D, according to some embodiments. Figure 8E shows that in this virtual network, the NE 870I is coupled to NE 870D and 870F, which are both still coupled to NE 870E.

Figure 8F illustrates a case where multiple VNEs (VNE 870A.1 and VNE 870H.1) are implemented on different NDs (ND 800A and ND 800H) and are coupled to each other, and where the centralized control plane 876 has abstracted these multiple VNEs such that they appear as a single VNE 870T within one of the virtual networks 892 of Figure 8D, according to some embodiments. Thus, the abstraction of a NE or VNE can span multiple NDs.

While some embodiments implement the centralized control plane 876 as a single entity (e.g., a single instance of software running on a single electronic device), alternative embodiments may spread the functionality across multiple entities for redundancy and/or scalability purposes (e.g., multiple instances of software running on different electronic devices).

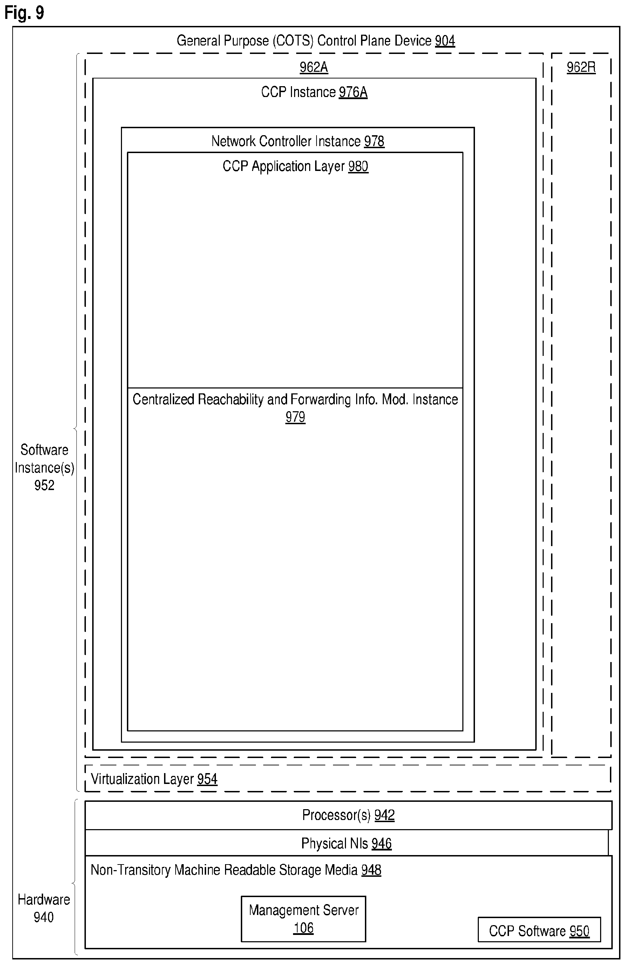

Similar to the network device implementations, the electronic device(s) running the centralized control plane 876, and thus the network controller 878 including the centralized reachability and forwarding information module 879, may be implemented a variety of ways (e.g., a special purpose device, a general-purpose (e.g., COTS) device, or hybrid device). These electronic device(s) would similarly include processor(s), a set or one or more physical NIs, and a non-transitory machine-readable storage medium having stored thereon the centralized control plane software. For instance, Figure 9 illustrates, a general purpose control plane device 904 including hardware 940 comprising a set of one or more processor(s) 942 (which are often COTS processors) and physical NIs 946, as well as non-transitory machine readable storage media 948 having stored therein centralized control plane (CCP) software 950.

In embodiments that use compute virtualization, the processor(s) 942 typically execute software to instantiate a virtualization layer 954 (e.g., in one embodiment the virtualization layer 954 represents the kernel of an operating system (or a shim executing on a base operating system) that allows for the creation of multiple instances 962A-R called software containers (representing separate user spaces and also called virtualization engines, virtual private servers, or jails) that may each be used to execute a set of one or more applications; in another embodiment the virtualization layer 954 represents a hypervisor (sometimes referred to as a virtual machine monitor (VMM)) or a hypervisor executing on top of a host operating system, and an application is run on top of a guest operating system within an instance 962A-R called a virtual machine (which in some cases may be considered a tightly isolated form of software container) that is run by the hypervisor ; in another embodiment, an application is implemented as a unikernel, which can be generated by compiling directly with an application only a limited set of libraries (e.g., from a library operating system (LibOS) including drivers/libraries of OS services) that provide the particular OS services needed by the application, and the unikernel can run directly on hardware 940, directly on a hypervisor represented by virtualization layer 954 (in which case the unikernel is sometimes described as running within a LibOS virtual machine), or in a software container represented by one of instances 962A-R). Again, in embodiments where compute virtualization is used, during operation an instance of the CCP software 950 (illustrated as CCP instance 976A) is executed (e.g., within the instance 962A) on the virtualization layer 954. In embodiments where compute virtualization is not used, the CCP instance 976A is executed, as a unikernel or on top of a host operating system, on the "bare metal" general purpose control plane device 904. The instantiation of the CCP instance 976A, as well as the virtualization layer 954 and instances 962A-R if implemented, are collectively referred to as software instance(s) 952.

In some embodiments, the CCP instance 976A includes a network controller instance 978. The network controller instance 978 includes a centralized reachability and forwarding information module instance 979 (which is a middleware layer providing the context of the network controller 878 to the operating system and communicating with the various NEs), and an CCP application layer 980 (sometimes referred to as an application layer) over the middleware layer (providing the intelligence required for various network operations such as protocols, network situational awareness, and user - interfaces). At a more abstract level, this CCP application layer 980 within the centralized control plane 876 works with virtual network view(s) (logical view(s) of the network) and the middleware layer provides the conversion from the virtual networks to the physical view.

The centralized control plane 876 transmits relevant messages to the data plane 880 based on CCP application layer 980 calculations and middleware layer mapping for each flow. A flow may be defined as a set of packets whose headers match a given pattern of bits; in this sense, traditional IP forwarding is also flow-based forwarding where the flows are defined by the destination IP address for example; however, in other implementations, the given pattern of bits used for a flow definition may include more fields (e.g., 10 or more) in the packet headers. Different NDs/NEs/VNEs of the data plane 880 may receive different messages, and thus different forwarding information. The data plane 880 processes these messages and programs the appropriate flow information and corresponding actions in the forwarding tables (sometime referred to as flow tables) of the appropriate NE/VNEs, and then the NEs/VNEs map incoming packets to flows represented in the forwarding tables and forward packets based on the matches in the forwarding tables.

Standards such as OpenFlow define the protocols used for the messages, as well as a model for processing the packets. The model for processing packets includes header parsing, packet classification, and making forwarding decisions. Header parsing describes how to interpret a packet based upon a well-known set of protocols. Some protocol fields are used to build a match structure (or key) that will be used in packet classification (e.g., a first key field could be a source media access control (MAC) address, and a second key field could be a destination MAC address).

Packet classification involves executing a lookup in memory to classify the packet by determining which entry (also referred to as a forwarding table entry or flow entry) in the forwarding tables best matches the packet based upon the match structure, or key, of the forwarding table entries. It is possible that many flows represented in the forwarding table entries can correspond/match to a packet; in this case the system is typically configured to determine one forwarding table entry from the many according to a defined scheme (e.g., selecting a first forwarding table entry that is matched). Forwarding table entries include both a specific set of match criteria (a set of values or wildcards, or an indication of what portions of a packet should be compared to a particular value/values/wildcards, as defined by the matching capabilities - for specific fields in the packet header, or for some other packet content), and a set of one or more actions for the data plane to take on receiving a matching packet. For example, an action may be to push a header onto the packet, for the packet using a particular port, flood the packet, or simply drop the packet. Thus, a forwarding table entry for IPv4/IPv6 packets with a particular transmission control protocol (TCP) destination port could contain an action specifying that these packets should be dropped.

Making forwarding decisions and performing actions occurs, based upon the forwarding table entry identified during packet classification, by executing the set of actions identified in the matched forwarding table entry on the packet.

However, when an unknown packet (for example, a "missed packet" or a "match-miss" as used in OpenFlow parlance) arrives at the data plane 880, the packet (or a subset of the packet header and content) is typically forwarded to the centralized control plane 876. The centralized control plane 876 will then program forwarding table entries into the data plane 880 to accommodate packets belonging to the flow of the unknown packet. Once a specific forwarding table entry has been programmed into the data plane 880 by the centralized control plane 876, the next packet with matching credentials will match that forwarding table entry and take the set of actions associated with that matched entry.

A network interface (NI) may be physical or virtual; and in the context of IP, an interface address is an IP address assigned to a NI, be it a physical NI or virtual NI. A virtual NI may be associated with a physical NI, with another virtual interface, or stand on its own (e.g., a loopback interface, a point-to-point protocol interface). A NI (physical or virtual) may be numbered (a NI with an IP address) or unnumbered (a NI without an IP address). A loopback interface (and its loopback address) is a specific type of virtual NI (and IP address) of a NE/VNE (physical or virtual) often used for management purposes; where such an IP address is referred to as the nodal loopback address. The IP address(es) assigned to the NI(s) of a ND are referred to as IP addresses of that ND; at a more granular level, the IP address(es) assigned to NI(s) assigned to a NE/VNE implemented on a ND can be referred to as IP addresses of that NE/VNE.

Next hop selection by the routing system for a given destination may resolve to one path (that is, a routing protocol may generate one next hop on a shortest path); but if the routing system determines there are multiple viable next hops (that is, the routing protocol generated forwarding solution offers more than one next hop on a shortest path - multiple equal cost next hops), some additional criteria is used - for instance, in a connectionless network, Equal Cost Multi Path (ECMP) (also known as Equal Cost Multi Pathing, multipath forwarding and IP multipath) may be used (e.g., typical implementations use as the criteria particular header fields to ensure that the packets of a particular packet flow are always forwarded on the same next hop to preserve packet flow ordering). For purposes of multipath forwarding, a packet flow is defined as a set of packets that share an ordering constraint. As an example, the set of packets in a particular TCP transfer sequence need to arrive in order, else the TCP logic will interpret the out of order delivery as congestion and slow the TCP transfer rate down.

A Layer 3 (L3) Link Aggregation (LAG) link is a link directly connecting two NDs with multiple IP-addressed link paths (each link path is assigned a different IP address), and a load distribution decision across these different link paths is performed at the ND forwarding plane; in which case, a load distribution decision is made between the link paths.

Some NDs include functionality for authentication, authorization, and accounting (AAA) protocols (e.g., RADIUS (Remote Authentication Dial-In User Service), Diameter, and/or TACACS+ (Terminal Access Controller Access Control System Plus). AAA can be provided through a client/server model, where the AAA client is implemented on a ND and the AAA server can be implemented either locally on the ND or on a remote electronic device coupled with the ND. Authentication is the process of identifying and verifying a subscriber. For instance, a subscriber might be identified by a combination of a username and a password or through a unique key. Authorization determines what a subscriber can do after being authenticated, such as gaining access to certain electronic device information resources (e.g., through the use of access control policies). Accounting is recording user activity. By way of a summary example, end user devices may be coupled (e.g., through an access network) through an edge ND (supporting AAA processing) coupled to core NDs coupled to electronic devices implementing servers of service/content providers. AAA processing is performed to identify for a subscriber the subscriber record stored in the AAA server for that subscriber. A subscriber record includes a set of attributes (e.g., subscriber name, password, authentication information, access control information, rate-limiting information, policing information) used during processing of that subscriber's traffic.

Certain NDs (e.g., certain edge NDs) internally represent end user devices (or sometimes customer premise equipment (CPE) such as a residential gateway (e.g., a router, modem)) using subscriber circuits. A subscriber circuit uniquely identifies within the ND a subscriber session and typically exists for the lifetime of the session. Thus, a ND typically allocates a subscriber circuit when the subscriber connects to that ND, and correspondingly de-allocates that subscriber circuit when that subscriber disconnects. Each subscriber session represents a distinguishable flow of packets communicated between the ND and an end user device (or sometimes CPE such as a residential gateway or modem) using a protocol, such as the point-to-point protocol over another protocol (PPPoX) (e.g., where X is Ethernet or Asynchronous Transfer Mode (ATM)), Ethernet, 802.1Q Virtual LAN (VLAN), Internet Protocol, or ATM). A subscriber session can be initiated using a variety of mechanisms (e.g., manual provisioning a dynamic host configuration protocol (DHCP), DHCP/client-less internet protocol service (CLIPS) or Media Access Control (MAC) address tracking). For example, the point-to-point protocol (PPP) is commonly used for digital subscriber line (DSL) services and requires installation of a PPP client that enables the subscriber to enter a username and a password, which in turn may be used to select a subscriber record. When DHCP is used (e.g., for cable modem services), a username typically is not provided; but in such situations other information (e.g., information that includes the MAC address of the hardware in the end user device (or CPE)) is provided. The use of DHCP and CLIPS on the ND captures the MAC addresses and uses these addresses to distinguish subscribers and access their subscriber records.

A virtual circuit (VC), synonymous with virtual connection and virtual channel, is a connection oriented communication service that is delivered by means of packet mode communication. Virtual circuit communication resembles circuit switching, since both are connection oriented, meaning that in both cases data is delivered in correct order, and signaling overhead is required during a connection establishment phase. Virtual circuits may exist at different layers. For example, at layer 4, a connection oriented transport layer datalink protocol such as Transmission Control Protocol (TCP) may rely on a connectionless packet switching network layer protocol such as IP, where different packets may be routed over different paths, and thus be delivered out of order. Where a reliable virtual circuit is established with TCP on top of the underlying unreliable and connectionless IP protocol, the virtual circuit is identified by the source and destination network socket address pair, i.e. the sender and receiver IP address and port number. However, a virtual circuit is possible since TCP includes segment numbering and reordering on the receiver side to prevent out-of-order delivery. Virtual circuits are also possible at Layer 3 (network layer) and Layer 2 (datalink layer); such virtual circuit protocols are based on connection oriented packet switching, meaning that data is always delivered along the same network path, i.e. through the same NEs/VNEs. In such protocols, the packets are not routed individually and complete addressing information is not provided in the header of each data packet; only a small virtual channel identifier (VCI) is required in each packet; and routing information is transferred to the NEs/VNEs during the connection establishment phase; switching only involves looking up the virtual channel identifier in a table rather than analyzing a complete address. Examples of network layer and datalink layer virtual circuit protocols, where data always is delivered over the same path: X.25, where the VC is identified by a virtual channel identifier (VCI); Frame relay, where the VC is identified by a VCI; Asynchronous Transfer Mode (ATM), where the circuit is identified by a virtual path identifier (VPI) and virtual channel identifier (VCI) pair; General Packet Radio Service (GPRS); and Multiprotocol label switching (MPLS), which can be used for IP over virtual circuits (Each circuit is identified by a label).

Certain NDs (e.g., certain edge NDs) use a hierarchy of circuits. The leaf nodes of the hierarchy of circuits are subscriber circuits. The subscriber circuits have parent circuits in the hierarchy that typically represent aggregations of multiple subscriber circuits, and thus the network segments and elements used to provide access network connectivity of those end user devices to the ND. These parent circuits may represent physical or logical aggregations of subscriber circuits (e.g., a virtual local area network (VLAN), a permanent virtual circuit (PVC) (e.g., for Asynchronous Transfer Mode (ATM)), a circuit-group, a channel, a pseudo-wire, a physical NI of the ND, and a link aggregation group). A circuit-group is a virtual construct that allows various sets of circuits to be grouped together for configuration purposes, for example aggregate rate control. A pseudo-wire is an emulation of a layer 2 point-to-point connection-oriented service. A link aggregation group is a virtual construct that merges multiple physical NIs for purposes of bandwidth aggregation and redundancy. Thus, the parent circuits physically or logically encapsulate the subscriber circuits.

Each VNE (e.g., a virtual router, a virtual bridge (which may act as a virtual switch instance in a Virtual Private LAN Service (VPLS) is typically independently administrable. For example, in the case of multiple virtual routers, each of the virtual routers may share system resources but is separate from the other virtual routers regarding its management domain, AAA (authentication, authorization, and accounting) name space, IP address, and routing database(s). Multiple VNEs may be employed in an edge ND to provide direct network access and/or different classes of services for subscribers of service and/or content providers.

Within certain NDs, "interfaces" that are independent of physical NIs may be configured as part of the VNEs to provide higher-layer protocol and service information (e.g., Layer 3 addressing). The subscriber records in the AAA server identify, in addition to the other subscriber configuration requirements, to which context (e.g., which of the VNEs/NEs) the corresponding subscribers should be bound within the ND. As used herein, a binding forms an association between a physical entity (e.g., physical NI, channel) or a logical entity (e.g., circuit such as a subscriber circuit or logical circuit (a set of one or more subscriber circuits)) and a context's interface over which network protocols (e.g., routing protocols, bridging protocols) are configured for that context. Subscriber data flows on the physical entity when some higher-layer protocol interface is configured and associated with that physical entity.

Some NDs provide support for implementing VPNs (Virtual Private Networks) (e.g., Layer 2 VPNs and/or Layer 3 VPNs). For example, the ND where a provider's network and a customer's network are coupled are respectively referred to as PEs (Provider Edge) and CEs (Customer Edge). In a Layer 2 VPN, forwarding typically is performed on the CE(s) on either end of the VPN and traffic is sent across the network (e.g., through one or more PEs coupled by other NDs). Layer 2 circuits are configured between the CEs and PEs (e.g., an Ethernet port, an ATM permanent virtual circuit (PVC), a Frame Relay PVC). In a Layer 3 VPN, routing typically is performed by the PEs. By way of example, an edge ND that supports multiple VNEs may be deployed as a PE; and a VNE may be configured with a VPN protocol, and thus that VNE is referred as a VPN VNE.

Some NDs provide support for VPLS (Virtual Private LAN Service). For example, in a VPLS network, end user devices access content/services provided through the VPLS network by coupling to CEs, which are coupled through PEs coupled by other NDs. VPLS networks can be used for implementing triple play network applications (e.g., data applications (e.g., highspeed Internet access), video applications (e.g., television service such as IPTV (Internet Protocol Television), VoD (Video-on-Demand) service), and voice applications (e.g., VoIP (Voice over Internet Protocol) service)), VPN services, etc. VPLS is a type of layer 2 VPN that can be used for multi-point connectivity. VPLS networks also allow end use devices that are coupled with CEs at separate geographical locations to communicate with each other across a Wide Area Network (WAN) as if they were directly attached to each other in a Local Area Network (LAN) (referred to as an emulated LAN).

In VPLS networks, each CE typically attaches, possibly through an access network (wired and/or wireless), to a bridge module of a PE via an attachment circuit (e.g., a virtual link or connection between the CE and the PE). The bridge module of the PE attaches to an emulated LAN through an emulated LAN interface. Each bridge module acts as a "Virtual Switch Instance" (VSI) by maintaining a forwarding table that maps MAC addresses to pseudowires and attachment circuits. PEs forward frames (received from CEs) to destinations (e.g., other CEs, other PEs) based on the MAC destination address field included in those frames.

In one embodiment, one or more of operations and functionality described above in relation to Figures 1-7 may be implemented by components described in relation to the approaches and elements of Figures 8A-8F and 9. For example, the management server 106 may reside in the control communication and configuration module 832A of the special purpose device 802 or an equivalent in the general purpose network device 804 or the hybrid network device 806. In another example, the management server 106 may reside in the centralized reachability and forwarding information module 879 of the centralized control plane 876. In still another embodiment, the management server 106 may reside in a machine readable storage medium, including the non-transitory machine-readable storage media 948 and the processor 942 may be configured to execute the management server 106.

In some embodiments, virtualization may be utilized to provide NFV. For example, the management server 106, the SDN switches 108, and/or the SDN controllers 104 may be a computing device configured to execute one or more virtual machines, containers, and/or microservices to provide NFV. In some embodiments, the SDN controllers 104 may be control plane devices (e.g., the general purpose control plane device 904) that are configured to implement a control plane of SDN.

While the systems, devices, structures, methods, and designs herein have been described in terms of several embodiments, those skilled in the art will recognize that the systems, devices, structures, methods, and designs are not limited to the embodiments described, can be practiced with modification and alteration.

The description is thus to be regarded as illustrative instead of limiting The scope of the invention is solely defined by the appended claims.

Additionally, while the flow diagrams in the figures show a particular order of operations performed by certain embodiments, it should be understood that such order is exemplary (e.g., alternative embodiments may perform the operations in a different order, combine certain operations, overlap certain operations, etc.).

## Claims

1. A method for managing transmissions between hypervisors (112) and network switches (108), the method comprising:
receiving, by a management server (106), registration messages from one or more hypervisors (112) active in a network (102), wherein:
the registration messages indicate the availability and capacity of one or more hypervisors (112), and
the one or more hypervisors (112) are configured to manage communications between software defined network, SDN, controllers (104) managing network slices and SDN network switches (108) operating in the network (102);
receiving, by the management server (106), a control message from a first SDN network switch (108) operating in the network (102), wherein the control message is intended to establish a connection between the first SDN network switch and the management server;
selecting, based on a registration message received from a first hypervisor, by the management server (106), the first hypervisor (112) for use by the first SDN network switch (108) to communicate with a first SDN controller (104) associated with the first hypervisor, wherein the first hypervisor (112) is associated with a first hypervisor address;
configuring, by the management server (106), the first hypervisor (112) to establish a connection with said first SDN controller (104) prior to transmitting a first translation instruction; and
transmitting, by the management server (106), the first translation instruction, including the first hypervisor address, to a network address translation device (114) in response to receiving the control message, wherein the first translation instruction indicates to the network address translation device (114) to replace in messages received from said first SDN network switch a
predefined pseudo destination address with said first hypervisor address and to forward messages received from said first SDN network switch (108) to the first hypervisor address.

2. The method of claim 1, wherein the controller (104) uses the first hypervisor (112) to manage resources of the network switch (108) to form a network slice.

3. The method of claim 1, wherein selecting the first hypervisor (112) comprises:
creating, by the management server (106), a hypervisor instance, wherein the hypervisor instance is the first hypervisor (112).

4. The method of claim 1, wherein configuring the first hypervisor (112) comprises:
indicating, by the management server (106), to the first hypervisor (112) to connect with the controller (104) and access control settings for the controller (104).

5. The method of claim 1, further comprising:
detecting, by the management server (106), a change to status information for the network (102); and
selecting, by the management server (106) in response to detecting the change to the status information for the network (102), a second hypervisor (112) for use by the network switch (108) to communicate with the controller (104).

6. The method of claim 5, further comprising:
transmitting, by the management server (106), a second translation instruction, including a second hypervisor address, to the network address translation device (114), wherein the second translation instruction indicates to the network address translation device (114) to map the destination address to the second hypervisor address and to forward traffic from the network switch (108) to the second hypervisor address, which is associated with the second hypervisor (112).

7. The method of claim 1, wherein the control message is a forwarding plane control message intended for a controller (104) or an initialization message for establishing a connection between the network switch (108) and the management server (106).

8. A network device for managing transmissions between hypervisors (112) and network switches (108) comprising:
a non-transitory machine-readable storage medium having stored therein a management server (106); and
a processor coupled to the non-transitory machine-readable storage medium, the processor configured to execute the management server (106),
wherein the management server (106) is configured to:
receive registration messages from one or more hypervisors (112) active in a network (102), wherein:
the registration messages indicate the availability and capacity of one or more hypervisors (112), and
the one or more hypervisors (112) are configured to manage communications between software defined network, SDN, controllers (104) managing network slices and SDN network switches (108) operating in the network (102);
receive a control message from a first SDN network switch (108), wherein the control message is intended to establish a connection between the first SDN network switch and the management server;
select, based on a registration message received from a first hypervisor, the first hypervisor (112) for use by the first SDN network switch (108) to communicate with a first SDN controller (104) associated with the first hypervisor, wherein the first hypervisor (112) is associated with a first hypervisor address;
configure the first hypervisor (112) to establish a connection with said first SDN controller (104) prior to transmitting a first translation instruction; and
transmit the first translation instruction, including the first hypervisor address, to a network address translation device (114) in response to establishing a connection with the network switch (108), wherein the first translation instruction indicates to the network address translation device (114) to replace in messages received from said first SDN network switch a
predefined pseudo destination address with said first hypervisor address and to forward messages from said first SDN network switch (108) to the first hypervisor address.

9. The network device of claim 8, wherein selecting the first hypervisor (112) comprises:
creating a hypervisor instance, wherein the hypervisor instance is the first hypervisor (112).

10. The network device of claim 8, wherein configuring the first hypervisor (112) comprises:
indicating to the first hypervisor (112) to connect with the controller (104) and access control settings for the controller (104).

11. The network device of claim 8, wherein the management server (106) is further configured to detect a change to status information for the network (102) and select, in response to detecting the change to the status information for the network (102), a second hypervisor (112) for use by the network switch (108) to communicate with the controller (104).

12. The network device of claim 11, wherein the management server (106) is further configured to, transmit a second translation instruction, including a second hypervisor address, to the network address translation device (114), wherein the second translation instruction indicates to the network address translation device (114) to map the destination address to the second hypervisor address and to forward traffic from the network switch (108) to the second hypervisor address, which is associated with the second hypervisor (112).

13. The network device of claim 8, wherein the network device is a computing device configured to execute a plurality of virtual machines, the plurality of virtual machines implementing network function virtualization (NFV) or the network device is a control plane device configured to implement a control plane of a software defined network (SDN).

14. A non-transitory machine-readable medium containing instructions that, when performed by a processor in a computing device, cause the computing device to:
receive registration messages from one or more hypervisors (112) active in a network (102), wherein:
the registration messages indicate the availability and capacity of one or more hypervisors (112), and
the one or more hypervisors (112) are configured to manage communications between software defined network, SDN, controllers (104) managing network slices and SDN network switches (108) operating in the network (102);
receive a control message from a first SDN network switch (108), wherein the control message is intended to establish a connection between the first SDN network switch and the management server;
select, based on a registration message received from a first hypervisor, the first hypervisor (112) for use by the first SDN network switch (108) to communicate with a first SDN controller (104) associated with the first hypervisor, wherein the first hypervisor (112) is associated with a first hypervisor address;
configure the first hypervisor (112) to establish a connection with said first SDN controller (104) prior to transmitting a first translation instruction; and
transmit the first translation instruction, including the first hypervisor address, to a network address translation device (114) in response to receiving the control message, wherein the first translation instruction indicates to the network address translation device (114) to replace in messages received from said first SDN network switch a
predefined pseudo destination address with said the first hypervisor address and to forward messages from said first SDN network switch (108) to the first hypervisor address.

## Patentansprüche

1. Verfahren zur Verwaltung von Übertragungen zwischen einem Hypervisoren (112) und Netzwerk-Switches (108), wobei das Verfahren umfasst:
Empfangen von Registrierungsnachrichten durch einen Verwaltungsserver (106) von einem oder mehreren Hypervisoren (112), die in einem Netzwerk (102) aktiv sind, wobei:
die Registrierungsnachrichten die Verfügbarkeit und Kapazität eines oder mehrerer Hypervisoren (112) anzeigen, und
der eine oder die mehreren Hypervisoren (112) zum Verwalten von Kommunikationen zwischen Steuerungen (104) eines softwaredefinierten Netzwerks, SDN, die Netzwerk-Slices verwalten, und SDN-Netzwerk-Switches (108), die im Netzwerk (102) operieren, konfiguriert sind;
Empfangen einer Steuernachricht durch den Verwaltungsserver (106) von einem ersten SDN-Netzwerk-Switch (108), der im Netzwerk (102) operiert, wobei die Steuernachricht zum Herstellen einer Verbindung zwischen dem ersten SDN-Netzwerk-Switch und dem Verwaltungsserver bestimmt ist;
Auswählen des ersten Hypervisors (112) durch den Verwaltungsserver (106) basierend auf einer von einem ersten Hypervisor empfangenen Nachricht zur Verwendung durch den ersten SDN-Netzwerk-Switch (108) zum Kommunizieren mit einer ersten SDN-Steuerung (104), die mit dem ersten Hypervisor assoziiert ist, wobei der erste Hypervisor (112) mit einer ersten Hypervisor-Adresse assoziiert ist;
Konfigurieren des ersten Hypervisors (112) durch den Verwaltungsserver (106) zum Herstellen einer Verbindung mit der ersten SDN-Steuerung (104) vor dem Senden einer ersten Übersetzungsanweisung; und
Senden der ersten Übersetzungsanweisung, die die erste Hypervisor-Adresse umfasst, durch den Verwaltungsserver (106) an eine Netzwerkadressübersetzungsvorrichtung (114) in Reaktion auf den Empfang der Steuernachricht, wobei die erste Übersetzungsanweisung der Netzwerkadressübersetzungsvorrichtung (114) anzeigt, dass sie in Nachrichten, die vom ersten SDN-Netzwerk-Switch empfangen werden, eine vordefinierte Pseudo-Zieladresse durch die erste Hypervisor-Adresse ersetzen und Nachrichten, die vom ersten SDN-Netzwerk-Switch (108) empfangen werden, an die Hypervisor-Adresse weiterleiten soll.

2. Verfahren nach Anspruch 1, wobei die Steuerung (104) den ersten Hypervisor (112) zum Verwalten von Ressourcen des Netzwerk-Switches (108) zum Bilden eines Netzwerk-Slice verwendet.

3. Verfahren nach Anspruch 1, wobei das Auswählen des ersten Hypervisors (112) umfasst:
Erstellen einer Hypervisor-Instanz durch den Verwaltungsserver (106), wobei die Hypervisor-Instanz der erste Hypervisor (112) ist.

4. Verfahren nach Anspruch 1, wobei das Konfigurieren des ersten Hypervisors (112) umfasst:
Anzeigen dem ersten Hypervisor (112), dass er eine Verbindung mit der Steuerung (104) herstellen und auf Steuereinstellungen für die Steuerung (104) zugreifen soll, durch den Verwaltungsserver (106).

5. Verfahren nach Anspruch 1, ferner umfassend:
Erkennen einen Änderung von Statusinformationen für das Netzwerk (102) durch den Verwaltungsserver (106); und
Auswählen eines zweiten Hypervisors (112) durch den Verwaltungsserver (106) in Reaktion auf das Erkennen der Änderung der Statusinformationen für das Netzwerk (102) zur Verwendung durch den Netzwerk-Switch (108) zum Kommunizieren mit der Steuerung (104).

6. Verfahren nach Anspruch 5, ferner umfassend:
Senden einer zweiten Übersetzungsanweisung, die eine zweite Hypervisor-Adresse umfasst, durch den Verwaltungsserver (106) an die Netzwerkadressübersetzungsvorrichtung (114), wobei die zweite Übersetzungsanweisung der Netzwerkadressübersetzungsvorrichtung (114) anzeigt, dass sie die Zieladresse auf die zweite Hypervisor-Adresse abbilden und Verkehr vom Netzwerk-Switch (108) an die zweite Hypervisor-Adresse weiterleiten soll, die mit dem zweiten Hypervisor (112) assoziiert ist.

7. Verfahren nach Anspruch 1, wobei die Steuernachricht eine Weiterleitungsebenen-Steuernachricht, die für eine Steuerung (104) bestimmt ist, oder eine Initialisierungsnachricht zum Herstellen einer Verbindung zwischen dem Netzwerk-Switch (108) dem Verwaltungsserver (106) ist.

8. Netzwerkvorrichtung zum Verwalten von Übertragungen zwischen Hypervisoren (112) und Netzwerk-Switches (108), umfassend:
ein nicht-transitorisches maschinenlesbares Speichermedium, das einen Verwaltungsserver (106) darauf gespeichert aufweist; und
einen Prozessor, der mit dem nicht-transitorischen maschinenlesbaren Speichermedium gekoppelt ist, wobei der Prozessor zum Ausführen des Verwaltungsservers (106) konfiguriert ist,
wobei der Verwaltungsserver (106) konfiguriert ist zum:
Empfangen von Registrierungsnachrichten von einem oder mehreren Hypervisoren (112), die in einem Netzwerk (102) aktiv sind, wobei:
die Registrierungsnachrichten die Verfügbarkeit und Kapazität eines oder mehrerer Hypervisoren (112) anzeigen, und
der eine oder die mehreren Hypervisoren (112) zum Verwalten von Kommunikationen zwischen Steuerungen (104) eines softwaredefinierten Netzwerks, SDN, die Netzwerk-Slices verwalten, und SDN-Netzwerk-Switches (108), die im Netzwerk (102) tätig sind, konfiguriert sind;
Empfangen einer Steuernachricht von einem ersten SDN-Netzwerk-Switch (108), wobei die Nachricht zum Herstellen einer Verbindung zwischen dem ersten SDN-Netzwerk-Switch und dem Verwaltungsserver bestimmt ist;
Auswählen des ersten Hypervisors (112) basierend auf einer von einem ersten Hypervisor empfangenen Nachricht zur Verwendung durch den ersten SDN-Netzwerk-Switch (108) zum Kommunizieren mit einer ersten SDN-Steuerung (104), die mit dem ersten Hypervisor assoziiert ist, wobei der erste Hypervisor (112) mit einer ersten Hypervisor-Adresse assoziiert ist;
Konfigurieren des ersten Hypervisors (112) zum Herstellen einer Verbindung mit der ersten SDN-Steuerung (104) vor dem Senden einer ersten Übersetzungsanweisung; und
Senden der ersten Übersetzungsanweisung, die die erste Hypervisor-Adresse umfasst, an eine Netzwerkadressübersetzungsvorrichtung (114) in Reaktion auf das Herstellen einer Verbindung mit dem Netzwerk-Switch (108), wobei die erste Übersetzungsanweisung der Netzwerkadressübersetzungsvorrichtung (114) anzeigt, dass sie in Nachrichten, die vom ersten SDN-Netzwerk-Switch empfangen werden, eine vordefinierte Pseudo-Zieladresse durch die erste Hypervisor-Adresse ersetzen und Nachrichten vom ersten SDN-Netzwerk-Switch (108) an die Hypervisor-Adresse weiterleiten soll.

9. Netzwerkvorrichtung nach Anspruch 8, wobei das Auswählen des ersten Hypervisors (112) umfasst:
Erstellen einer Hypervisor-Instanz, wobei die Hypervisor-Instanz der erste Hypervisor (112) ist.

10. Netzwerkvorrichtung nach Anspruch 8, wobei das Konfigurieren des ersten Hypervisors (112) umfasst:
Anzeigen dem ersten Hypervisor (112), dass er eine Verbindung mit der Steuerung (104) herstellen und auf Steuereinstellungen für die Steuerung (104) zugreifen soll.

11. Netzwerkvorrichtung nach Anspruch 8, wobei der Verwaltungsserver (106) ferner zum Erkennen einer Änderung von Statusinformationen für das Netzwerk (102) und Auswählen eines zweiten Hypervisors (112) zur Verwendung durch den Netzwerk-Switch (108) zum Kommunizieren mit der Steuerung (104) in Reaktion auf das Erkennen der Änderung der Statusinformationen für das Netzwerk (102) konfiguriert ist.

12. Netzwerkvorrichtung nach Anspruch 11, wobei der Verwaltungsserver (106) ferner so konfiguriert ist, dass er eine zweite Übersetzungsanweisung, die eine zweite Hypervisor-Adresse umfasst, an die Netzwerkadressübersetzungsvorrichtung (114) sendet, wobei die zweite Übersetzungsanweisung der Netzwerkadressübersetzungsvorrichtung (114) anzeigt, dass sie die Zieladresse auf die zweite Hypervisor-Adresse abbilden und Verkehr vom Netzwerk-Switch (108) an die zweite Hypervisor-Adresse weiterleiten soll, die mit dem zweiten Hypervisor (112) assoziiert ist.

13. Netzwerkvorrichtung nach Anspruch 8, wobei die Netzwerkvorrichtung eine Datenverarbeitungsvorrichtung ist, die zum Ausführen einer Mehrzahl von virtuellen Maschinen konfiguriert ist, wobei die Mehrzahl von virtuellen Maschinen Netzwerkfunktionsvirtualisierung (NFV) implementiert, oder die Netzwerkvorrichtung eine Steuerebenen-Vorrichtung ist, die zum Implementieren einer Steuerebene eines softwaredefinierten Netzwerks (SDN) konfiguriert ist.

14. Nicht-transitorisches computerlesbares Medium, das Anweisungen enthält, die bei Ausführung durch einen Prozessor einer Datenverarbeitungsvorrichtung die Datenverarbeitungsvorrichtung veranlassen zum:
Empfangen von Registrierungsnachrichten von einem oder mehreren Hypervisoren (112), die in einem Netzwerk (102) aktiv sind, wobei:
die Registrierungsnachrichten die Verfügbarkeit und Kapazität eines oder mehrerer Hypervisoren (112) anzeigen, und
der eine oder die mehreren Hypervisoren (112) zum Verwalten von Kommunikationen zwischen Steuerungen (104) eines softwaredefinierten Netzwerks, SDN, die Netzwerk-Slices verwalten, und SDN-Netzwerk-Switches (108), die im Netzwerk (102) tätig sind, konfiguriert sind;
Empfangen einer Steuernachricht von einem ersten SDN-Netzwerk-Switch (108), wobei die Nachricht zum Herstellen einer Verbindung zwischen dem ersten SDN-Netzwerk-Switch und dem Verwaltungsserver bestimmt ist;
Auswählen des ersten Hypervisors (112) basierend auf einer von einem ersten Hypervisor empfangenen Nachricht zur Verwendung durch den ersten SDN-Netzwerk-Switch (108) zum Kommunizieren mit einer ersten SDN-Steuerung (104), die mit dem ersten Hypervisor assoziiert ist, wobei der erste Hypervisor (112) mit einer ersten Hypervisor-Adresse assoziiert ist;
Konfigurieren des ersten Hypervisors (112) zum Herstellen einer Verbindung mit der ersten SDN-Steuerung (104) vor dem Senden einer ersten Übersetzungsanweisung; und
Senden der ersten Übersetzungsanweisung, die die erste Hypervisor-Adresse umfasst, an eine Netzwerkadressübersetzungsvorrichtung (114) in Reaktion auf den Empfang der Steuernachricht, wobei die erste Übersetzungsanweisung der Netzwerkadressübersetzungsvorrichtung (114) anzeigt, dass sie in Nachrichten, die vom ersten SDN-Netzwerk-Switch empfangen werden, eine vordefinierte Pseudo-Zieladresse durch die erste Hypervisor-Adresse ersetzen und Nachrichten vom ersten SDN-Netzwerk-Switch (108) an die Hypervisor-Adresse weiterleiten soll.

## Revendications

1. Procédé de gestion de transmissions entre des hyperviseurs (112) et des commutateurs de réseau (108), le procédé comprenant :
la réception, par un serveur de gestion (106), de messages d'enregistrement depuis un ou plusieurs hyperviseurs (112) actifs dans un réseau (102), dans lequel :
les messages d'enregistrement indiquent la disponibilité et la capacité d'un ou plusieurs hyperviseurs (112), et
les un ou plusieurs hyperviseurs (112) sont configurés pour gérer des communications entre des dispositifs de commande de réseau défini par logiciel, SDN, (104) gérant des tranches de réseau et des commutateurs de réseau SDN (108) fonctionnant dans le réseau (102) ;
la réception, par le serveur de gestion (106), d'un message de commande depuis un premier commutateur de réseau SDN (108) fonctionnant dans le réseau (102), dans lequel le message de commande est destiné à établir une connexion entre le premier commutateur de réseau SDN et le serveur de gestion ;
la sélection, sur la base d'un message d'enregistrement reçu depuis un premier hyperviseur, par le serveur de gestion (106), du premier hyperviseur (112) à utiliser par le premier commutateur de réseau SDN (108) pour communiquer avec un premier dispositif de commande SDN (104) associé au premier hyperviseur, dans lequel le premier hyperviseur (112) est associé à une première adresse d'hyperviseur ;
la configuration, par le serveur de gestion (106), du premier hyperviseur (112) pour établir une connexion avec ledit premier dispositif de commande SDN (104) avant la transmission d'une première instruction de conversion ; et
la transmission, par le serveur de gestion (106), de la première instruction de conversion, incluant la première adresse d'hyperviseur, à un dispositif de conversion d'adresse de réseau (114) en réponse à la réception du message de commande, dans lequel la première instruction de conversion indique au dispositif de conversion d'adresse de réseau (114) de remplacer, dans des messages reçus depuis ledit premier commutateur de réseau SDN, une pseudo adresse de destination prédéfinie par ladite première adresse d'hyperviseur et de transférer des messages reçus depuis ledit premier commutateur de réseau SDN (108) à la première adresse d'hyperviseur.

2. Procédé selon la revendication 1, dans lequel le dispositif de commande (104) utilise le premier hyperviseur (112) pour gérer des ressources du commutateur de réseau (108) pour former une tranche de réseau.

3. Procédé selon la revendication 1, dans lequel la sélection du premier hyperviseur (112) comprend :
la création, par le serveur de gestion (106), d'une instance d'hyperviseur, dans lequel l'instance d'hyperviseur est le premier hyperviseur (112).

4. Procédé selon la revendication 1, dans lequel la configuration du premier hyperviseur (112) comprend :
l'indication, par le serveur de gestion (106), au premier hyperviseur (112) de se connecter au dispositif de commande (104) et d'accéder à des réglages de commande pour le dispositif de commande (104).

5. Procédé selon la revendication 1, comprenant en outre :
la détection, par le serveur de gestion (106), d'un changement d'informations de statut pour le réseau (102) ; et
la sélection, par le serveur de gestion (106) en réponse à la détection du changement des informations de statut pour le réseau (102), d'un deuxième hyperviseur (112) à utiliser par le commutateur de réseau (108) pour communiquer avec le dispositif de commande (104).

6. Procédé selon la revendication 5, comprenant en outre :
la transmission, par le serveur de gestion (106), d'une deuxième instruction de conversion, incluant une deuxième adresse d'hyperviseur, au dispositif de conversion d'adresse de réseau (114), dans lequel la deuxième instruction de conversion indique au dispositif de conversion d'adresse de réseau (114) de faire correspondre l'adresse de destination avec la deuxième adresse d'hyperviseur et de transférer un trafic depuis le commutateur de réseau (108) à la deuxième adresse d'hyperviseur, qui est associée au deuxième hyperviseur (112).

7. Procédé selon la revendication 1, dans lequel le message de commande est un message de commande de plan de transfert destiné à un dispositif de commande (104) ou un message d'initialisation pour établir une connexion entre le commutateur de réseau (108) et le serveur de gestion (106).

8. Dispositif de réseau pour gérer des transmissions entre des hyperviseurs (112) et des commutateurs de réseau (108) comprenant :
un support de stockage non transitoire lisible par machine sur lequel est stocké un serveur de gestion (106) ; et
un processeur couplé au support de stockage non transitoire lisible par machine, le processeur étant configuré pour exécuter le serveur de gestion (106),
dans lequel le serveur de gestion (106) est configuré pour :
recevoir des messages d'enregistrement depuis un ou plusieurs hyperviseurs (112) actifs dans un réseau (102), dans lequel :
les messages d'enregistrement indiquent la disponibilité et la capacité d'un ou plusieurs hyperviseurs (112), et
les un ou plusieurs hyperviseurs (112) sont configurés pour gérer des communications entre des dispositifs de commande de réseau défini par logiciel, SDN, (104) gérant des tranches de réseau et des commutateurs de réseau SDN (108) fonctionnant dans le réseau (102) ;
recevoir un message de commande depuis un premier commutateur de réseau SDN (108), dans lequel le message de commande est destiné à établir une connexion entre le premier commutateur de réseau SDN et le serveur de gestion ;
sélectionner, sur la base d'un message d'enregistrement reçu depuis un premier hyperviseur, le premier hyperviseur (112) à utiliser par le premier commutateur de réseau SDN (108) pour communiquer avec un premier dispositif de commande SDN (104) associé au premier hyperviseur, dans lequel le premier hyperviseur (112) est associé à une première adresse d'hyperviseur ;
configurer le premier hyperviseur (112) pour établir une connexion avec ledit premier dispositif de commande SDN (104) avant la transmission d'une première instruction de conversion ; et
transmettre la première instruction de conversion, incluant la première adresse d'hyperviseur, à un dispositif de conversion d'adresse de réseau (114) en réponse à l'établissement d'une connexion avec le commutateur de réseau (108), dans lequel la première instruction de conversion indique au dispositif de conversion d'adresse de réseau (114) de remplacer, dans des messages reçus depuis ledit premier commutateur de réseau SDN, une pseudo adresse de destination prédéfinie par ladite première adresse d'hyperviseur et de transférer des messages depuis ledit premier commutateur de réseau SDN (108) à la première adresse d'hyperviseur.

9. Dispositif de réseau selon la revendication 8, dans lequel la sélection du premier hyperviseur (112) comprend :
la création d'une instance d'hyperviseur, dans lequel l'instance d'hyperviseur est le premier hyperviseur (112) .

10. Dispositif de réseau selon la revendication 8, dans lequel la configuration du premier hyperviseur (112) comprend :
l'indication au premier hyperviseur (112) de se connecter au dispositif de commande (104) et d'accéder à des réglages de commande pour le dispositif de commande (104).

11. Dispositif de réseau selon la revendication 8, dans lequel le serveur de gestion (106) est en outre configuré pour détecter un changement d'informations de statut pour le réseau (102) et sélectionner, en réponse à la détection du changement des informations de statut pour le réseau (102), un deuxième hyperviseur (112) à utiliser par le commutateur de réseau (108) pour communiquer avec le dispositif de commande (104).

12. Dispositif de réseau selon la revendication 11, dans lequel le serveur de gestion (106) est en outre configuré pour transmettre une deuxième instruction de conversion, incluant une deuxième adresse d'hyperviseur, au dispositif de conversion d'adresse de réseau (114), dans lequel la deuxième instruction de conversion indique au dispositif de conversion d'adresse de réseau (114) de faire correspondre l'adresse de destination avec la deuxième adresse d'hyperviseur et de transférer un trafic depuis le commutateur de réseau (108) à la deuxième adresse d'hyperviseur, qui est associée au deuxième hyperviseur (112) .

13. Dispositif de réseau selon la revendication 8, dans lequel le dispositif de réseau est un dispositif informatique configuré pour exécuter une pluralité de machines virtuelles, la pluralité de machines virtuelles mettant en oeuvre une virtualisation de fonction de réseau (NFV) ou le dispositif de réseau est un dispositif de plan de commande configuré pour mettre en oeuvre un plan de commande d'un réseau défini par logiciel (SDN).

14. Support non transitoire lisible par machine contenant des instructions qui, lorsqu'elles sont réalisées par un processeur dans un dispositif informatique, amènent le dispositif informatique à :
recevoir des messages d'enregistrement depuis un ou plusieurs hyperviseurs (112) actifs dans un réseau (102), dans lequel :
les messages d'enregistrement indiquent la disponibilité et la capacité d'un ou plusieurs hyperviseurs (112), et
les un ou plusieurs hyperviseurs (112) sont configurés pour gérer des communications entre des dispositifs de commande de réseau défini par logiciel, SDN, (104) gérant des tranches de réseau et des commutateurs de réseau SDN (108) fonctionnant dans le réseau (102) ;
recevoir un message de commande depuis un premier commutateur de réseau SDN (108), dans lequel le message de commande est destiné à établir une connexion entre le premier commutateur de réseau SDN et le serveur de gestion ;
sélectionner, sur la base d'un message d'enregistrement reçu depuis un premier hyperviseur, le premier hyperviseur (112) à utiliser par le premier commutateur de réseau SDN (108) pour communiquer avec un premier dispositif de commande SDN (104) associé au premier hyperviseur, dans lequel le premier hyperviseur (112) est associé à une première adresse d'hyperviseur ;
configurer le premier hyperviseur (112) pour établir une connexion avec ledit premier dispositif de commande SDN (104) avant la transmission d'une première instruction de conversion ; et
transmettre la première instruction de conversion, incluant la première adresse d'hyperviseur, à un dispositif de conversion d'adresse de réseau (114) en réponse à la réception du message de commande, dans lequel la première instruction de conversion indique au dispositif de conversion d'adresse de réseau (114) de remplacer, dans des messages reçus depuis ledit premier commutateur de réseau SDN, une pseudo adresse de destination prédéfinie par ladite première adresse d'hyperviseur et de transférer des messages depuis ledit premier commutateur de réseau SDN (108) à la première adresse d'hyperviseur.
